(19) **Europäisches Patentamt**
**European Patent Office**
**Office européen des brevets**

(11) **EP 4 535 783 A1**

(12) **EUROPEAN PATENT APPLICATION**

(43) Date of publication:
**09.04.2025 Bulletin 2025/15**

(21) Application number: **24196563.1**

(22) Date of filing: **27.08.2024**

(51) International Patent Classification (IPC):
**H04N 19/13** (2014.01)   **G06T 9/00** (2006.01)
**H04N 19/503** (2014.01)   **H04N 19/60** (2014.01)
**H04N 19/91** (2014.01)

(52) Cooperative Patent Classification (CPC):
**H04N 19/91; G06T 9/001; G06T 9/004;**
**H04N 19/13; H04N 19/503; H04N 19/60**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **06.10.2023  JP 2023173949**

(71) Applicant: **Sharp Kabushiki Kaisha**
**Sakai City, Osaka 590-8522 (JP)**

(72) Inventors:
• **TOKUMO, Yasuaki**
  **Sakai City, Osaka, 590-8522 (JP)**

• **TAKADA, Keiichiro**
  **Sakai City, Osaka, 590-8522 (JP)**
• **IKAI, Tomohiro**
  **Sakai City, Osaka, 590-8522 (JP)**
• **CHUJOH, Takeshi**
  **Sakai City, Osaka, 590-8522 (JP)**
• **AONO, Tomoko**
  **Sakai City, Osaka, 590-8522 (JP)**

(74) Representative: **Müller Hoffmann & Partner**
**Patentanwälte mbB**
**St.-Martin-Straße 58**
**81541 München (DE)**

(54) **3D DATA DECODING APPARATUS AND 3D DATA ENCODING APPARATUS**

(57)   Obj ect

An object is to achieve, in encoding and decoding of 3D data using an arithmetic encoding scheme, improved encoding efficiency for a base mesh and high-quality encoding and decoding of the 3D data.

Solution

A 3D data decoding apparatus for decoding encoded data includes a mesh prediction unit configured to derive a prediction position of a base mesh vertex position from the encoded data, and an arithmetic decoder configured to arithmetically decode a prediction residual. The arithmetic decoder decodes a part of a beginning of a prefix of an absolute value of a coefficient of the prediction residual by using a context, and adds the prediction position and the prediction residual to derive the base mesh vertex position.

FIG. 5

**Description**

Technical Field

Embodiments of the present invention relate to a 3D data encoding apparatus and a 3D data decoding apparatus.

Background Art

A 3D data encoding apparatus that converts 3D data into a two-dimensional image and encodes it using a video encoding scheme to generate encoded data and a 3D data decoding apparatus that decodes a two-dimensional image from the encoded data to reconstruct 3D data are provided to efficiently transmit or record 3D data.

Specific 3D data encoding schemes include, for example, MPEG-I ISO/IEC 23090-5 Visual Volumetric Video-based Coding (V3C) and Video-based Point Cloud Compression (V-PCC). V3C can encode and decode a point cloud including point positions and attribute information. V3C is also used to encode and decode multi-view videos and mesh videos through ISO/IEC 23090-12 (MPEG Immersive Video (MIV)) and ISO/IEC 23090-29 (Video-based Dynamic Mesh Coding (V-DMC)) that is currently being standardized. A latest draft document of the V-DMC scheme is disclosed in NPL 1.

In such 3D data encoding schemes, geometries and attributes that constitute 3D data are encoded and decoded as images using a video encoding scheme such as H.265/HEVC (High Efficiency Video Coding) or H.266/VVC (Versatile Video Coding).

In the case of a point cloud, a geometry image is an image corresponding to depths to the projection plane and an attribute image is an image of attributes projected onto the projection plane.

The 3D data (mesh) as described in NPL 1 includes a base mesh, a mesh displacement, and a texture-mapped image. A vertex encoding scheme such as Draco can be used for encoding the base mesh. Methods for encoding the mesh displacement include direct encoding by arithmetic encoding, in addition to a method of using a video codec to encode a mesh displacement image obtained by two-dimensionally converting the mesh displacement. The texture-mapped image is encoded as an attribute image by a video codec. As a video codec, the above-described HEVC and VVC can be used.

Citation List

Non Patent Literature

NPL 1:
WD 4.0 of V-DMC (MDS23075_WG07_N00680_clean), ISO/IEC JTC 1/SC 29/WG 7 N0680, July 2023

Summary of Invention

Technical Problem

The 3D data encoding scheme disclosed in NPL 1 allows encoding and decoding of mesh displacements (mesh displacement array, mesh displacement image), mesh motion information, and a base mesh constituting 3D data (mesh) using an arithmetic encoding scheme. A problem with arithmetic encoding of the mesh displacements, the mesh motion information, and the base mesh is that encoding efficiency is not good because the performance of the encoding depends on syntax elements and contexts.

An object of the present invention is to achieve, in encoding and decoding of 3D data using an arithmetic encoding scheme, improved encoding efficiency for a base mesh and high-quality encoding and decoding of the 3D data.

Solution to Problem

To solve the above-described problems, a 3D data decoding apparatus according to an aspect of the present invention is a 3D data decoding apparatus for decoding encoded data, and includes a mesh prediction unit configured to derive a prediction position of a base mesh vertex position from the encoded data, and an arithmetic decoder configured to arithmetically decode a prediction residual. The arithmetic decoder decodes a part of a beginning of a prefix of an absolute value of a coefficient of the prediction residual by using a context, and adds the prediction position and the prediction residual to derive the base mesh vertex position.

To solve the above-described problems, a 3D data encoding apparatus according to an aspect of the present invention is a 3D data encoding apparatus for encoding 3D data, and includes a mesh prediction unit configured to derive a prediction position of a base mesh vertex position, and an arithmetic encoder configured to arithmetically encode a prediction residual. The arithmetic encoder encodes a part of a beginning of a prefix of an absolute value of a coefficient of the prediction residual by using a context.

Advantageous Effects of Invention

An aspect of the present invention allows improvement of encoding efficiency for a base mesh and high-quality encoding and decoding of 3D data.

Brief Description of Drawings

FIG. 1 is a schematic diagram illustrating a configuration of a 3D data transmission system according to the present embodiment.
FIG. 2 is a diagram illustrating a hierarchical structure of data of an encoding stream.
FIG. 3 is a functional block diagram illustrating a schematic configuration of a 3D data decoding apparatus 31.
FIG. 4 is a functional block diagram illustrating a configuration of a base mesh decoder 303.
FIG. 5 is a functional block diagram illustrating a configuration of a mesh displacement decoder 305.
FIG. 6 is a functional block diagram illustrating a configuration of a mesh reconstructor 307.
FIG. 7 is a diagram illustrating an example of syntax of a configuration for a configuration for transmitting coordinate conversion parameters and context initialization parameters at a sequence level (ASPS).
FIG. 8 is a diagram illustrating an example of syntax of a configuration for transmitting coordinate conversion parameters and context initialization parameters at a picture/frame level (AFPS).
FIG. 9 is a diagram for describing operation of the mesh reconstructor 307.
FIG. 10 is a functional block diagram illustrating a schematic configuration of a 3D data encoding apparatus 11.
FIG. 11 is a functional block diagram illustrating a configuration of a base mesh encoder 103.
FIG. 12 is a functional block diagram illustrating a configuration of a mesh displacement encoder 107.
FIG. 13 is a functional block diagram illustrating a configuration of a mesh separator 115.
FIG. 14 is a diagram for describing operation of the mesh separator 115.
FIG. 15 is an example of a syntax structure for mesh displacements.
FIG. 16 is a functional block diagram illustrating a configuration of a mesh decoder 3031.
FIG. 17 is an example of a syntax structure of a base mesh.
FIG. 18 is a diagram illustrating a method of deriving a context of syntax elements of the base mesh.
FIG. 19 is a functional block diagram illustrating a configuration of a mesh encoder 1031.

Description of Embodiments

Embodiments of the present invention will be described below with reference to the drawings.

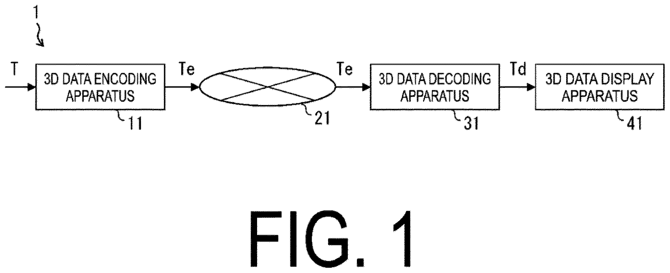

FIG. 1 is a schematic diagram illustrating a configuration of a 3D data transmission system 1 according to the present embodiment.
The 3D data transmission system 1 is a system that transmits an encoding stream obtained by encoding 3D data to be encoded, decodes the transmitted encoding stream, and displays 3D data. The 3D data transmission system 1 includes a 3D data encoding apparatus 11, a network 21, a 3D data decoding apparatus 31, and a 3D data display apparatus 41.
3D data T is input to the 3D data encoding apparatus 11.
The network 21 transmits an encoding stream Te generated by the 3D data encoding apparatus 11 to the 3D data decoding apparatus 31. The network 21 is the Internet, a Wide Area Network (WAN), a Local Area Network (LAN), or a combination thereof. The network 21 is not limited to a bi-directional communication network and may be a unidirectional communication network that transmits broadcast waves for terrestrial digital broadcasting, satellite broadcasting, or the like. The network 21 may be replaced by a storage medium on which the encoding stream Te is recorded, such as a Digital Versatile Disc (DVD) (trade name) or a Blu-ray Disc (BD) (trade name).
The 3D data decoding apparatus 31 decodes each encoding stream Te transmitted by the network 21 and generates one or more pieces of decoded 3D data Td.
The 3D data display apparatus 41 displays all or some of one or more pieces of decoded 3D data Td generated by the 3D data decoding apparatus 31. The 3D data display apparatus 41 includes a display apparatus such as, for example, a liquid crystal display or an organic electro-luminescence (EL) display. Examples of display types include stationary, mobile, and HMD. The 3D data display apparatus 41 displays a high quality image in a case that the 3D data decoding apparatus 31 has high processing capacity and displays an image that does not require high processing or display capacity in a case that it has only lower processing capacity.

Operators

Operators used in the present specification will be described below.

">>" is a right bit shift, "<<" is a left bit shift, "&" is a bitwise AND, "|" is a bitwise OR, "|=" is an OR assignment operator, and "‖" indicates a logical sum.

x ? y : z is a ternary operator that takes y in a case that x is true (other than 0) and takes z in a case that x is false (0).

"y .. z" indicates a set of integers from y to z.

Structure of Encoding Stream Te

Prior to a detailed description of a 3D data encoding apparatus 11 and a 3D data decoding apparatus 31 according to the present embodiment, a data structure of the encoding stream Te generated by the 3D data encoding apparatus 11 and decoded by the 3D data decoding apparatus 31 will be described.

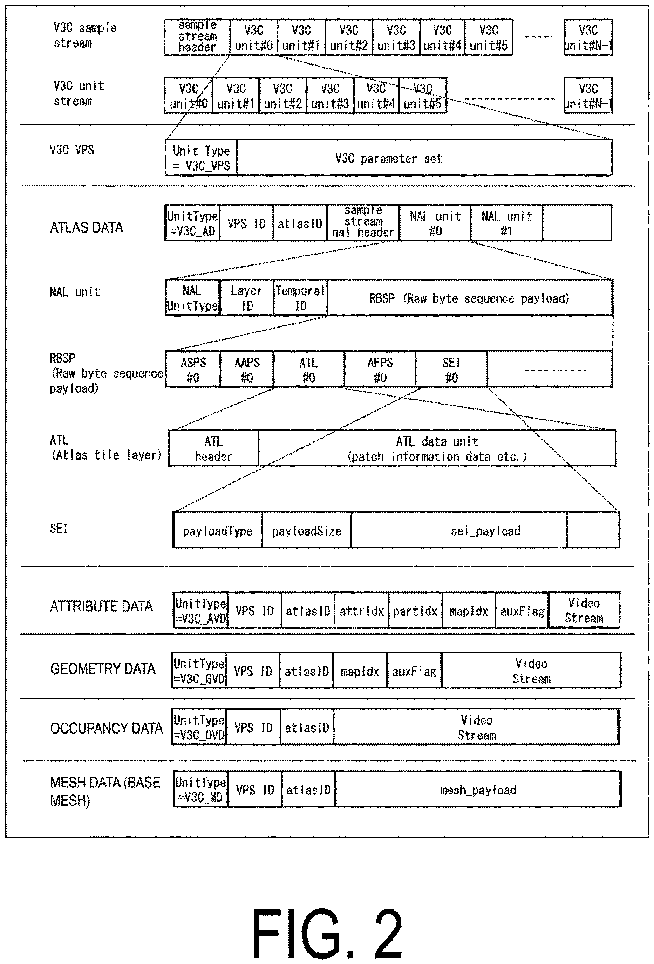

FIG. 2 is a diagram illustrating a hierarchical structure of data of the encoding stream Te. The encoding stream Te has a data structure of either a V3C sample stream or a V3C unit stream. A V3C sample stream includes a sample stream header and V3C units. The V3C unit stream includes a V3C unit.

Each V3C unit includes a V3C unit header and a V3C unit payload. The V3C unit header is a Unit Type that is an ID indicating the type of the V3C unit, and takes a value indicated by a label such as V3C_VPS, V3C_AD, V3C_AVD, V3C_GVD, or V3C_OVD.

In a case that the Unit Type is a V3C_VPS (Video Parameter Set), the V3C unit includes a V3C parameter set.

In a case that the Unit Type is V3C_AD (Atlas Data), the V3C unit includes a VPS ID, an atlasID, a sample stream nal header, and multiple NAL units. The atlasID is Identification (ID) and takes an integer value of 0 or more.

Each NAL unit includes a NALUnitType, a layerID, a TemporalID, and a Raw Byte Sequence Payload (RBSP).

A NAL unit is identified by NALUnitType and includes an Atlas Sequence Parameter Set (ASPS), an Atlas Adaptation Parameter Set (AAPS), an Atlas Tile Layer (ATL), Supplemental Enhancement Information (SEI), and the like.

The ATL includes an ATL header and an ATL data unit and the ATL data unit includes information on positions and sizes of patches or the like such as patch information data.

The SEI includes a payloadType indicating the type of the SEI, a payloadSize indicating the size (number of bytes) of the SEI, and an sei_payload which is data of the SEI.

In a case that the Unit Type is V3C_AVD (Attribute Video Data, attribute data), the V3C unit includes a VPS ID, an atlasID, an attrIdx which is an attribute image ID, a partIdx which is a partition ID, a mapIdx which is a map ID, a flag auxFlag indicating whether the data is Auxiliary data, and a video stream. The video stream is data encoded by HEVC, VVC, or the like. The attribute data corresponds to a texture image in the V-DMC.

In a case that the NalUnitType is V3C_GVD (Geometry Video Data, geometry data), the V3C unit includes a VPS ID, an atlasID, a mapIdx, an auxFlag, and a video stream. The geometry data corresponds to mesh displacements in the V-DMC.

In a case that the Unit Type is V3C_OVD (Occupancy Video Data, occupancy data), the V3C unit includes the VPS ID, atlasID, and the video stream.

In a case that the Unit Type is V3C_MD (Mesh Data), the V3C unit includes a VPS ID, an atlasID, and a mesh_payload. In V-DMC, this corresponds to a base mesh.

Configuration of 3D Data Decoding Apparatus According to First Embodiment

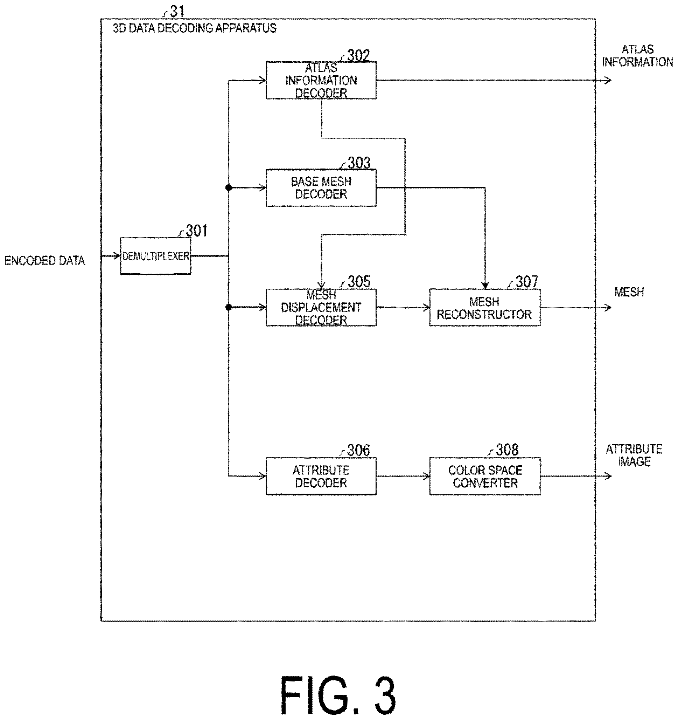

FIG. 3 is a functional block diagram illustrating a schematic configuration of the 3D data decoding apparatus 31 according to a first embodiment. The 3D data decoding apparatus 31 includes a demultiplexer 301, an atlas information decoder 302, a base mesh decoder 303, a mesh displacement decoder 305, a mesh reconstructor 307, an attribute decoder 306, and a color space converter 308. The 3D data decoding apparatus 31 receives encoded data of 3D data and outputs atlas information, mesh, and an attribute image.

The demultiplexer 301 receives encoded data multiplexed in a byte stream format, an ISOBMFF (ISO Base Media File Format), or the like and demultiplexes it and outputs an encoded atlas information stream (an Atlas Data stream of V3C_AD and NALunits), an encoded base mesh stream (a mesh_payload of V3C_MD), an encoded mesh displacement stream (a video stream of V3C_GVD), and an attribute video stream (a video stream of V3C_AVD).

The atlas information decoder 302 receives the encoded atlas information stream output from the demultiplexer 301 and decodes atlas information.

The atlas information decoder 302 in FIG. 3 decodes encoded data to obtain coordinate system conversion information displacementCoordinateSystem (asps_vdmc_ext_displacement_coordinate_system, afps_vdmc_ext_displacement_coordinate_system) indicating a coordinate system. Note that a gating flag may also be provided separately and each piece of coordinate system conversion information may be decoded only in a case that the gating flag is 1. The gating flag is, for example, afps_vdmc_ext_displacement_coordinate_system_enable_flag.

The base mesh decoder 303 decodes an encoded base mesh stream that has been encoded by vertex encoding (a 3D data compression encoding scheme such as, for example, Draco) and outputs a base mesh. The base mesh will be described later.

The mesh displacement decoder 305 decodes a mesh displacement encoding stream and outputs mesh displacements.

The mesh reconstructor 307 receives the base mesh and mesh displacements and reconstructs a mesh in 3D space.

The attribute decoder 306 decodes an attribute video stream obtained by encoding such as VVC or HEVC, and outputs an attribute image. The attribute image may be a texture image (a texture mapped image obtained by transform by a UV atlas method) expanded on a UV axis and may be in a YCbCr format. The type of codec used for encoding is indicated by a ptl_profile_codec_group_idc obtained by decoding the V3C parameter set of encoded data. This may also be indicated by a Four CC code indicated by an ai_geometry_codec_id[atlasID] in the V3C parameter set. The ai_geometry_codec_id[atlasID] indicates an index corresponding to the codec ID of a decoder used to decode the attribute video stream in the atlas ID.

The color space converter 308 performs color space conversion of the attribute image from a YCbCr format to an RGB format. Note that it is also possible to adopt a configuration in which an attribute video stream encoded in an RGB format is decoded and color space conversion is omitted.

Decoding of Base Mesh

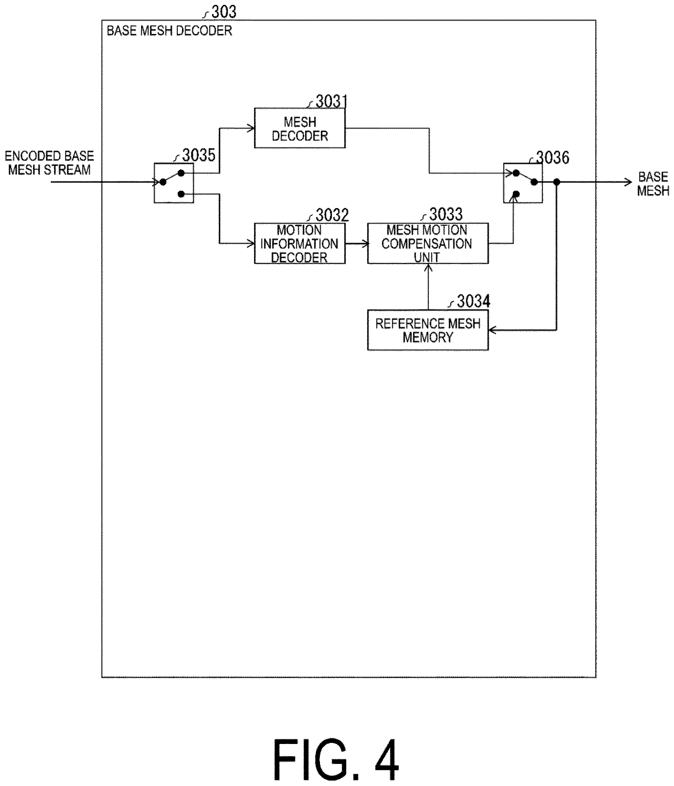

FIG. 4 is a functional block diagram illustrating a configuration of the base mesh decoder 303. The base mesh decoder 303 includes a mesh decoder 3031, a motion information decoder 3032, a mesh motion compensation unit 3033, a reference mesh memory 3034, a switch 3035, and a switch 3036. The base mesh decoder 303 may include a base mesh inverse quantization unit (not illustrated) before the output of a base mesh. Each of the switches 3035 and 3036 is connected to the side where no motion compensation is performed in a case that the base mesh to be decoded has been encoded (intra-encoded) without reference to other base meshes (for example, base meshes that have already been encoded and decoded). On the other hand, each of the switches 3035 and 3036 is connected to the side where motion compensation is performed in a case that the base mesh to be decoded has been encoded (inter-encoded) with reference to another base mesh. In a case that motion compensation is performed, target vertex coordinates are derived with reference to already decoded vertex coordinates and motion information.

The mesh decoder 3031 decodes an encoded base mesh stream that has been intra-encoded and outputs a base mesh (a base mesh vertex position, a base mesh vertex position vector). Draco, edge breaker, or the like is used as an encoding scheme.

The motion information decoder 3032 decodes an encoded base mesh stream that has been inter-encoded and outputs motion information (mesh motion information, a mesh motion vector) for each vertex of a reference mesh which will be described later. Entropy encoding such as arithmetic encoding is used as an encoding scheme.

The mesh motion compensation unit 3033 performs motion compensation on each vertex of the reference mesh received from the reference mesh memory 3034 based on the motion information and outputs a motion-compensated mesh.

The reference mesh memory 3034 is a memory that holds decoded meshes for reference in subsequent decoding processing.

Decoding of Mesh Displacements

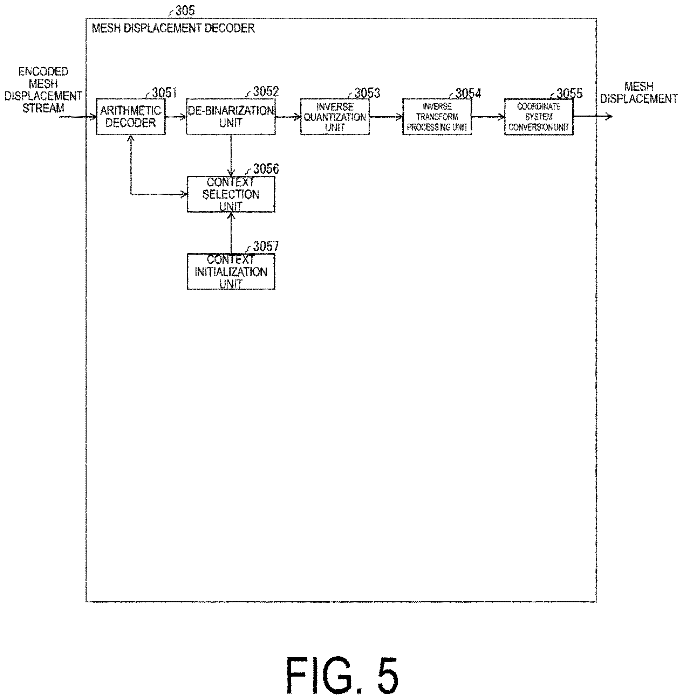

FIG. 5 is a functional block diagram illustrating a configuration of the mesh displacement decoder 305. The mesh displacement decoder 305 includes a CABAC decoder (an arithmetic decoder 3051, a de-binarization unit 3052, a context selection unit 3056, and a context initialization unit 3057), an inverse quantization unit 3053, an inverse transform processing unit 3054, and a coordinate system conversion unit 3055.

Context-adaptive Binary Arithmetic Encoding

The arithmetic decoder 3051, the de-binarization unit 3052, the context selection unit 3056, and the context initialization unit 3057 use a decoding method using context, which is referred to as Context-Adaptive Binary Arithmetic Coding (CABAC). In CABAC, a binary string including 0s and 1s is encoded and decoded for each bit using a state variable (CABAC state) referred to as a context. All CABAC states are initialized at the beginning of a segment. The CABAC decoder decodes each bit of a binary string (Bin String) corresponding to a syntax element. In a case that a context is used, a context index ctxInc is derived for each bit of the syntax element, the bit is decoded using the context, and the CABAC state of the context is updated. Bits for which no context is used are decoded with equal probability (EP, bypass), and update of the index ctxIdx, indicating a context, and the specified context is omitted. The context is a variable (memory area) for holding the probability (state) of CABAC, and is identified by the value (0, 1, 2, ...) of ctxIdx. A case that 0 and 1 are always equal in probability, i.e., 0 and 1 both have a probability of 0.5, is called Equal Probability (EP) or bypass. In this case, no context is used because no state needs to be held for a particular syntax element. A static context may be used in which the probability is fixed at 0.5 and need not be updated. In this sense, the context may be referred to as static rather than bypass. An integer value such as 128 may be used as a value indicating the probability of 0.5.

Note that the following pseudocode may be used for the processing of decoding one bit (by bypassing) without using a context.

```
rangeTimesProb = IvlRange >> 1
binVal = ( rangeTimesProb <= ( IvlCode - IvlLow ) )
if (binVal == 0)
   IvlRange = rangeTimesProb
else {
   IvlLow += rangeTimesProb
   IvlRange -= rangeTimesProb
}
```

Note that the following pseudocode may be used for the processing of decoding one bit using a context. Here, prob0 is a variable indicating the probability of the context.

```
rangeTimesProb = IvlRange * prob0 >> 16
binVal = ( rangeTimesProb <= ( IvlCode - IvlLow ) )
if (binVal == 0)
   IvlRange = rangeTimesProb
else {
   IvlLow += rangeTimesProb
   IvlRange -= rangeTimesProb
}
```

Coordinate Systems

The following two types of coordinate systems are used as coordinate systems for mesh displacements (three-dimensional vectors).

Cartesian coordinate system (canonical): An orthogonal coordinate system that is commonly defined throughout 3D space. An (X, Y, Z) coordinate system. An orthogonal coordinate system whose directions do not change at the same time (within the same frame or within the same tile).

Local coordinate system (local): An orthogonal coordinate system defined for each region or each vertex in 3D space. An orthogonal coordinate system whose directions can change at the same time (within the same frame or within the same tile). A coordinate system with a normal axis (D), a tangent axis (U), and a bi-tangent axis (V). That is, the local coordinate system is an orthogonal coordinate system that has a first axis (D) indicated by a normal vector n_vec at a certain vertex (on a surface including a certain vertex) and a second axis (U) and a third axis (V) indicated by two tangent vectors t_vec and b_vec orthogonal to the normal vector n_vec. n_vec, t_vec, and b_vec are three-dimensional vectors. The (D, U, V) coordinate system may also be referred to as an (n, t, b) coordinate system.

Decoding and Derivation of Sequence-Level Control Parameters

Here, control parameters used in the mesh displacement decoder 305 will be described.

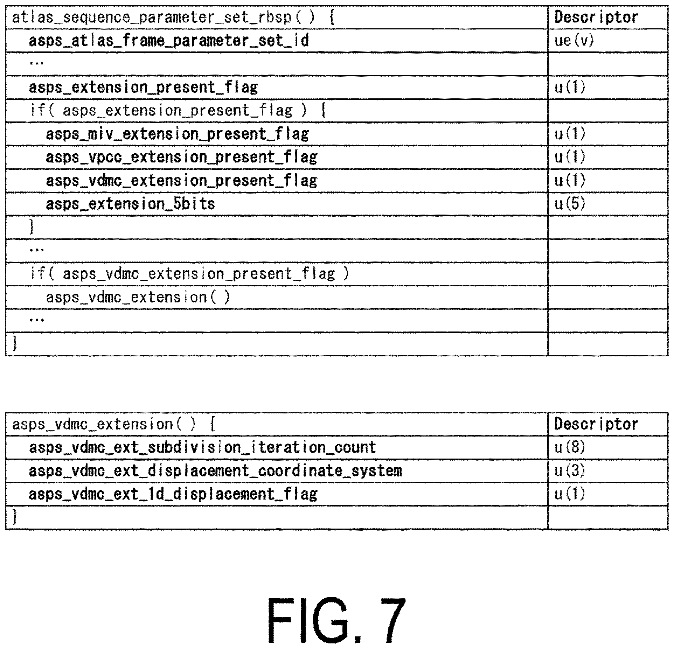

FIG. 7 is an example of syntax of a configuration for transmitting a coordinate system conversion parameter by the ASPS at a sequence level. The ASPS (Atlas Sequence Parameter Set or Atlas sequence mesh information) is one of the NAL units of the atlas information and includes syntax elements that apply to the atlas information encoding stream. In the ASPS, the coordinate system conversion parameter is transmitted by an asps _vdmc_extension() syntax. Semantics of each field are as follows.

asps_vdmc_ext_subdivision_iteration_count: A parameter indicating the number of mesh subdivision iterations.

asps_vdmc_ext_displacement_coordinate_system: Coordinate system conversion information indicating the coordinate system for mesh displacements. A value equal to a prescribed first value (for example, 0) indicates a Cartesian coordinate system. A value equal to a second value (for example, 1) different from the first value indicates a local coordinate system.

asps_vdmc_ext_1d_displacement_flag: A flag indicating whether the mesh displacement is one-dimensional. The value being true indicates that the mesh displacement is one-dimensional. The value being false indicates that the mesh displacement is three-dimensional.

Decoding and Derivation of Picture/Frame-Level Control Parameters

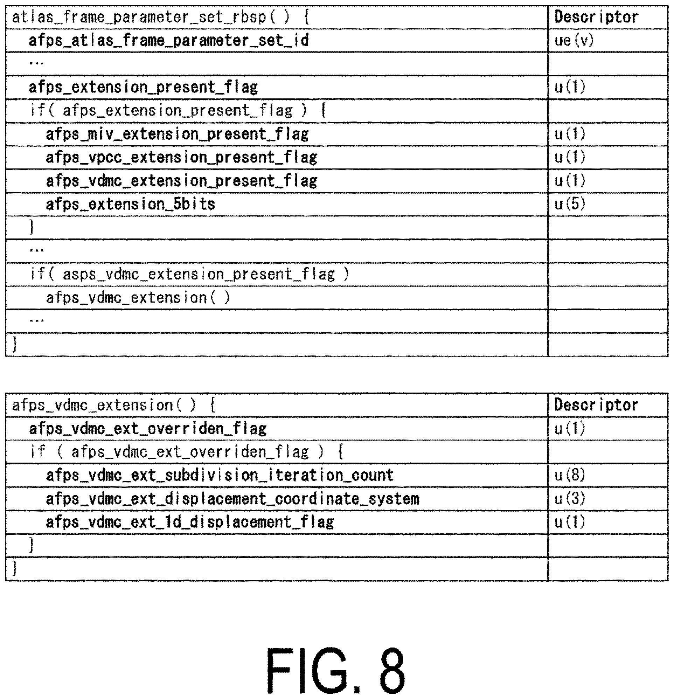

FIG. 8 is an example of syntax of a configuration for transmitting a coordinate system conversion parameter by the AFPS at a picture/frame level. The AFPS (Atlas Frame Parameter Set or Atlas frame mesh information) is one of the NAL units of the atlas information and includes syntax elements that apply to the atlas information encoding stream. In the AFPS, the coordinate system conversion parameter is transmitted by an afps_vdmc_extension() syntax. Semantics of each field are as follows.

afps_vdmc_ext_overriden_flag: A flag indicating whether to update a coordinate system for mesh displacements. In a case that this flag is equal to true, the coordinate system for mesh displacements is updated based on the value of afps_vdmc_ext_displacement_coordinate_system described below. In a case that this flag is equal to false, the coordinate system for mesh displacements is not updated.

afps_vdmc_ext_subdivision_iteration_count: A parameter indicating the number of mesh subdivision iterations.

afps_vdmc_ext_displacement_coordinate_system: Coordinate system conversion information indicating the coordinate system for mesh displacements. A value equal to a first value (for example, 0) indicates a Cartesian coordinate system. A value equal to a second value (for example, 1) indicates a local coordinate system. In a case that this syntax element is not present, the value is inferred to be a value decoded using the ASPS and a coordinate system indicated by the ASPS is set as a default coordinate system.

afps_vdmc_ext_1d_displacement_flag: A flag indicating whether the mesh displacement is one-dimensional. The value being true indicates that the mesh displacement is one-dimensional. The value being false indicates that the mesh displacement is three-dimensional.

Mesh Displacement Syntax Structure

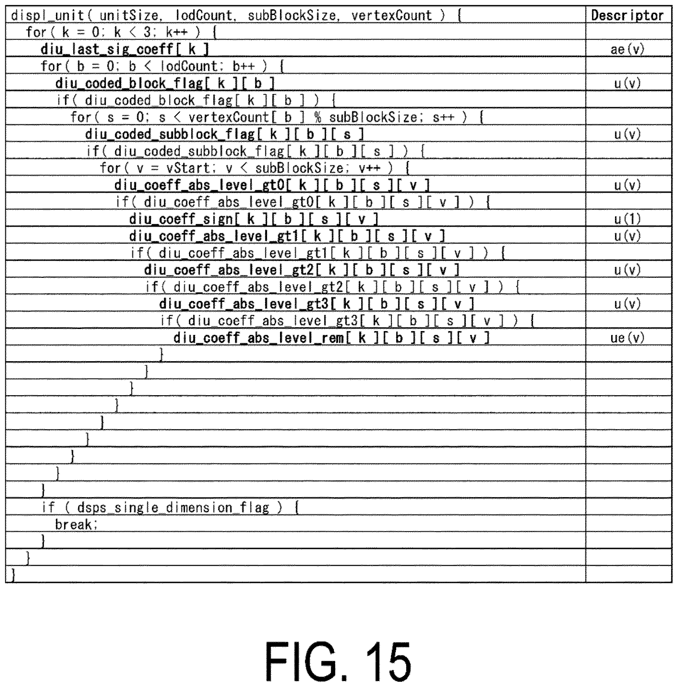

FIG. 15 is an example of the syntax structure for mesh displacements. The semantics are as follows. The mesh displacement is a row of values (coefficients) of a position pos and a k component and is represented by an array Qdisp [pos][k]. The displacement is a three-dimensional signal in the Cartesian coordinate system (xyz) or the local coordinate system (ntb), and each component of the three-dimensional displacement is referred to as a component. Here, a displacement Qdisp is a value resulting from discrete wavelet transform, lifting transform, DCT transform, or the like, and is also referred to as a coefficient. The component variable k takes a value of 0, 1, or 2. The variable name is not limited to k, and dim may be another variable name. The order of indices of QDisp may be reversed, in other words, Qdisp[k][pos] may be used instead of Qdisp[pos][k].

diu_last_sig_coeff[k]: An index indicating, in the k component, the final position of a non-zero mesh displacement coefficient.

diu_coded_block_flag[k][b]: This indicates, in the k component, whether a block with index b includes a non-zero mesh displacement coefficient. In a case of inclusion, the value is 1, and otherwise the value is 0.

diu_coded_subblock_flag[k][b][s]: This indicates, in the k component, whether a subblock with index s of the block with the index b includes a non-zero mesh displacement coefficient. In a case of inclusion, the value is 1, and otherwise the value is 0.

diu_coeff_abs_level_gt0[k][b][s][v]: This indicates, in the k component, whether an absolute value of the non-zero mesh displacement coefficient of the vertex with index v of the subblock with index s of the block with index b is greater than 0. In a case of being greater, the value is 1, and otherwise the value is 0.

diu_coeff_abs_level_gt1[k][b][s][v]: This indicates, in the k-component, whether an absolute value of the non-zero mesh displacement coefficient of the vertex with the index v of the subblock with the index s of the block with the index b is greater than 1. In a case of being greater, the value is 1, and otherwise the value is 0. In a case that this syntax element is not present, the value is inferred to be 0.

diu_coeff_abs_level_gt2[k][b][s][v]: This indicates, in the k-component, whether an absolute value of the non-zero mesh displacement coefficient of the vertex with the index v of the subblock with the index s of the block with the index b is greater than 2. In a case of being greater, the value is 1, and otherwise the value is 0. In a case that this syntax element is not present, the value is inferred to be 0.

diu_coeff_abs_level_gt3[k][b][s][v]: This indicates, in the k-component, whether an absolute value of the non-zero mesh displacement coefficient of the vertex with the index v of the subblock with the index s of the block with the index b is greater than 3. In a case of being greater, the value is 1, and otherwise the value is 0. In a case that this syntax element is not present, the value is inferred to be 0.

diu_coeff_sign[k][b][s][v]: This indicates, in the k-component, whether the non-zero mesh displacement coefficient of the vertex with the index v of the subblock with the index s of the block with the index b is a positive number. For example, in a case of being a positive number, the value is 1, and otherwise (in a case of being a negative number) the value is 0. In a case that this syntax element is not present, the value is inferred to be 1.

diu_coeff_abs_level_rem[k][b][s][v]: In the k component, a value obtained by subtracting 4 from the absolute value of the non-zero mesh displacement coefficient of the vertex with the index v of the subblock with the index s of the block with the index b. In a case that this syntax element is not present, the value is inferred to be 0.

The mesh displacement decoder 305 decodes diu_last_sig_coeff for each component of the mesh displacement. Then, the number lodCount of lods of the k-component is derived from diu_last_sig_coeff[k].

The mesh displacement decoder 305 decodes diu_coded_block_flag for each detail level (lod) of the mesh displacement. Then, the number vertexCount of blocks b is derived from diu_coded_block_flag[k][b].

The mesh displacement decoder 305 decodes diu_coded_subblock_flag for each block of the mesh displacement. Then, the start position vStart of the subblock s is derived from diu_coded_subblock_flag[k][b][s].

The mesh displacement decoder 305 decodes diu_coeff_abs_level_gt0 for each subblock of the mesh displacement, and decodes subsequent diu_coeff_sign and diu_coeff_abs_level_gt1 in a case that diu_coeff_abs_level_gt0 is a prescribed value (for example, other than 0).

In a case that diu_coeff_abs_level_gt1 is a prescribed value (for example, other than 0), the mesh displacement decoder 305 decodes subsequent diu_coeff_abs_level_gt2.

In a case that diu_coeff_abs_level_gt2 is a prescribed value (for example, other than 0), the mesh displacement decoder 305 decodes subsequent diu_coeff_abs_level_gt3.

In a case that diu_coeff_abs_level_gt3 is a prescribed value (for example, other than 0), the mesh displacement decoder 305 decodes subsequent diu_coeff_abs_level_rem.

Operation of Mesh Displacement Decoder

The arithmetic decoder 3051 decodes the mesh displacement encoding stream arithmetically encoded according to a value (context) indicating a random variable, and outputs a binary signal. The binary signal may be an alpha code, or may be a k-th order exponential Golomb code (k-th order Exp-Golomb-code). The exponential Golomb code includes prefix and suffix codes. The prefix is an exponentially increasing value and the suffix is its remainder. Note that, in a case that a variable rem is encoded and decoded using the exponential Golomb code, the prefix and the suffix of the exponential Golomb code are also referred to as the prefix and the suffix of rem.

The de-binarization unit 3052 decodes the binary signal to obtain a quantized mesh displacement Qdisp, which is a multi-valued signal.

The context selection unit 3056 (context memory) includes a memory for holding a context, derives a context used for arithmetic decoding of the mesh displacement depending on a state, and updates the value as necessary. Depending on a frame type ft (e.g. 0: intra frame, 1: inter frame), the level of the mesh subdivision lod (level of detail) and the component dim of a mesh displacement vector, the arithmetic decoding of each coefficient of the mesh displacement may use the following different context arrays. The context includes a variable indicating the probability of occurrence of a binary signal.

ctxCodedSubBlock[numFT][numLOD] [numDim]
ctxCoeffGtN[numFT] [numLOD] [MAX_GTN + 1] [numDim]
ctxCoeffRemPrefix[numFT] [numLOD] [numDim] [numPrefixBin]

Note that a static context with a fixed probability without context update is referred to as a ctxStatic. The syntax element indicated by ctxStatic may be decoded without using a context. decode(ctxStatic) may use dedicated processing for bypass as decode_bypass().

Here, numFT is the number of frame types and numFT = 2. numPrefixBin is the number of bins using a context in the prefix, and numPrefixBin may be 2.

numLOD is the maximum number of levels of detail for mesh subdivision and may be the value of a syntax element asps_vdmc_ext_subdivision_iteration_count or afps_vdmc_ext_subdivision_iteration_count decoded from the bitstream or numLOD may be 4.

numLOD = asps_vdmc_ext_subdivision_iteration_count

numLOD = afps_vdmc_ext_subdivision_iteration_count

numDim is the number of dimensions of the mesh displacement vector, and may be the value of a syntax element asps_vdmc_ext_1d_displacement_flag or afps_vdmc_ext_1d_displacement_flag decoded from the bitstream, or numDim may be 3.

numDim = asps_vdmc_ext_1d_displacement_flag ? 1 : 3
numDim = afps_vdmc_ext_1d_displacement_flag ? 1 : 3

The maximum value MAX_GTN of a threshold for the coefficient is 3.

ctxCodedSubBlock[numFT][numLOD][numDim] is an array of contexts used to decode the syntax element diu_coded_subblock_flag. The arithmetic decoder 3051 uses the value of ctxCodedSubBlock[ft][lod][dim] to decode diu_coded_subblock_flag in the frame type ft, the detail level lod, and the dimension dim of the mesh displacement vector.

ctxCoeffGtN[numFT][numLOD][MAX_GTN + 1][numDim] is an array of contexts used to decode syntax elements diu_coeff_abs_level_gtN (N is replaced with 0, 1, 2, MAX_GTN). The arithmetic decoder 3051 decodes diu_coeff_abs_level_gtN at the frame type ft, the detail level lod, and the dimension dim of the mesh displacement vector using the value of ctxCoeffGtN[ft] [lod] [N] [dim].

The arithmetic decoder 3051 decodes diu_coeff_sign in the frame type ft, the detail level lod, and the dimension dim of the mesh displacement vector using the bypass.

ctxCoeffRemPrefix[numFT][numLOD][numDim][numPrefixBin] is an array of contexts used to decode the syntax element diu_coeff_abs_level_rem. ctxCoeffRemPrefix[bin] indicates a context at a bin position in binarization of the prefix of diu_coeff_abs_level_rem. The arithmetic decoder 3051 uses the value of ctxCoeffRemPrefix[ft][lod][dim] to decode diu_coeff_abs_level_rem in the frame type ft, the detail level lod, and the dimension dim of the mesh displacement vector.

The context initialization unit 3057 initializes a context (probability of occurrence of a binary signal). The context may be initialized for each frame or for each group of one or more frames (Group of Frames, GoF). In a case that the context is initialized for each frame, random access to any frame can be easily performed because there is no dependency of the context between frames. Initialization of the context for each GoF allows the encoding efficiency to be further improved compared to initialization of the context for each frame because the former is less frequent than the latter.

Processing of Deriving Mesh Displacement

The mesh displacement decoder 305 decodes the syntax elements diu_last_sig_coeff, diu_coded_block_flag, diu_coded_subblock_flag, diu_coeff_abs_level_gt0, diu_coeff_abs_level_gt1, diu_coeff_abs_level_gt2, diu_coeff_abs_level_gt3, diu_coeff_abs_level_rem, and diu_coeff_sign to derive the mesh displacement Qdisp, by using the following processing.

Here, the mesh displacement decoder 305 decodes diu_last_sig_coeff in units of components. The diu_coded_block_flag is decoded in units of LOD (units of blocks), and the diu_coded_subblock_flag is decoded in units of subblocks of the subBlockSize size. In a case that diu_coded_subblock_flag is a prescribed value, the mesh displacement coefficient in the subblock is decoded.

```
for (k = 0; k < numDim; k++) { // dimension (component) loop
  // decode diu_last_sig_coeff
  diu_last_sig_coeff[k] = decodeExpGolomb(ctxStatic)
  dispOffset = 0
  for (b = 0; b <numLOD; b++) { // Level of Detail loop, block loop
    // decode diu_coded_block_flag
    diu_coded_block_flag[k][b] = decode(ctxStatic)
    if (diu_coded_block_flag[k][b]) {
```

```
numSubBlocks = dispCount[b] / subBlockSize + 1
for (s = 0; s < numSubBlocks; s++) { // subblock loop
  // decode diu_coded_subblock_flag
  diu_coded_subblock_flag[k][b][s] = decode(ctxCodedSubBlock[ft][b][k])
  if (diu_coded_subblock_flag[k][b][s]) {
    for (v = 0; v < subBlockSize; v++) { // coefficient loop within subbl
ock
      value = 0
      // decode diu_coeff_abs_level_gt0
      diu_coeff_abs_level_gt0[k][b][s][v]
        = decode(ctxCoeffGtN[ft][b][0][k])
      if (diu_coeff_abs_level_gt0[k][b][s][v]) {
        value++
        // decode diu_coeff_sign
        diu_coeff_sign[k][b][s][v] = decode(ctxStatic)
        // decode diu_coeff_abs_level_gt1
        diu_coeff_abs_level_gt1[k][b][s][v]
          = decode(ctxCoeffGtN[ft][b][1][k])
        if (diu_coeff_abs_level_gt1[k][b][s][v]) {
          value++
          // decode diu_coeff_abs_level_gt2
          diu_coeff_abs_level_gt2[k][b][s][v]
            = decode(ctxCoeffGtN[ft][b][2][k])
          if (diu_coeff_abs_level_gt2[k][b][s][v]) {
            value++
            // decode diu_coeff_abs_level_gt3
            diu_coeff_abs_level_gt3[k][b][s][v]
              = decode(ctxCoeffGtN[ft][b][3][k])
            if (diu_coeff_abs_level_gt3[k][b][s][v]) {
              // decode diu_coeff_abs_level_rem
              diu_coeff_abs_level_rem[k][b][s][v]
                = decodeExpGolomb(ctxCoeffRemPrefix[ft][b][k])
              value += (1 + diu_coeff_abs_level_rem)
            }
          }
        }
        if (diu_coeff_sign[k][b][s][v]) {
          value = -value
        }
      }
      Qdisp[dispOffset + s * subBlockSize + v][k] = value
    }
  }
}
dispOffset += dispCount[b]
}
}
```

Here, decode(ctx) is a function for decoding a 1-bit value with a corresponding context ctx being an argument, and decodeExpGolomb(ctxPrefix, ctxSuffix) is a function for decoding a value binarized using a k-th order Golomb code (for example, k = 0). ctxPrefix[n] is used as a context of the prefix at a bin position n, and ctxSuffix[m] is used as a context of the suffix at a bin position m. In a case that a context is not used for the suffix (a bypass is used), it is simply expressed as decodeExpGolomb(ctxPrefix).

value++ is an operation of incrementing a variable value by 1, value += 1, and value = value + 1. subBlockSize is the size of the subblock. for indicates a loop. subBlockSize may use a value of a power of 2 from 16 to 4096. For example, it may be 128 or 256. dispCount[b] is the number of mesh displacements of the detail level b.

The inverse quantization unit 3053 performs inverse quantization based on a quantization scale value iscale to derive a transformed (for example, wavelet-transformed) mesh displacement Tdisp. Tdisp may be a value in a Cartesian coordinate system or a local coordinate system. iscale is a value derived from the quantization parameter of each component of a mesh displacement image.

$$Tdisp[0][] = (Qdisp[0][] * iscale[0] + iscaleOffset) >> iscaleShift$$

$$Tdisp[1][] = (Qdisp[1][] * iscale[1] + iscaleOffset) >> iscaleShift$$

$$Tdisp[2][] = (Qdisp[2][] * iscale[2] + iscaleOffset) >> iscaleShift$$

Here, iscaleOffset = 1 << (iscaleShift - 1). iscaleShift may be a predetermined constant or may be a value that has been encoded in a sequence level, a picture/frame level, a tile/patch level, or the like and decoded from encoded data.

The inverse transform processing unit 3054 performs an inverse transform g (for example, an inverse wavelet transform) and derives a mesh displacement d.

```
d[0][] = g(Tdisp[0][])
d[1][] = g(Tdisp[1][])
d[2][] = g(Tdisp[2][])
```

The coordinate system conversion unit 3055 converts the mesh displacement (the coordinate system for mesh displacements) into a Cartesian coordinate system based on the value of coordinate system conversion information displacementCoordinateSystem. Specifically, in a case that displacementCoordinateSystem == 1, the displacement in the local coordinate system is converted into the displacement in the Cartesian coordinate system. Here, d is a three-dimensional vector indicating a mesh displacement before coordinate system conversion. disp is a three-dimensional vector indicating a mesh displacement after coordinate system conversion and is a value in the Cartesian coordinate system. n_vec, t_vec, and b_vec are three-dimensional vectors (in the Cartesian coordinate system) corresponding to the axes of a local coordinate system of a target region or target vertex.

```
if (displacementCoordinateSystem == 0) {
  disp = d
} else if (displacementCoordinateSystem == 1){
  disp = d[0] * n_vec + d[1] * t_vec + d[2] * b_vec
}
```

Derivation methods described above using vector multiplication can be individually expressed as scalars as follows.

```
if (displacementCoordinateSystem == 0) {
  for (i = 0; i < 3; i++) {disp[i] = d[i]}
} else if (displacementCoordinateSystem == 1){
  for (i = 0; i < 3; i++) {disp[i] = d[0] * n_vec[i] + d[1] * t_vec[i] + d[2] *
  b_vec[i]}
}
```

Note that it is also possible to adopt a configuration in which the same variable name is assigned to the values before and after transform such that disp = d and the value of d is updated through coordinate conversion.

Alternatively, the following configuration may be used.

```
if (displacementCoordinateSystem == 0) {
  disp = d
} else if (displacementCoordinateSystem == 1){
  disp = d[0] * n_vec + d[1] * t_vec + d[2] * b_vec
} else if (displacementCoordinateSystem == 2){
  disp = d[0] * n_vec2 + d[1] * t_vec2 + d[2] * b_vec2
}
```

Here, n_vec2, t_vec2, and b_vec2 are three-dimensional vectors (in the Cartesian coordinate system) corresponding to the axes of a local coordinate system of an adjacent region.
Alternatively, the following configuration may be used.

```
if (displacementCoordinateSystem == 0) {
  disp = d
} else if (displacementCoordinateSystem == 1){
  disp = d[0] * n_vec3 + d[1] * t_vec3 + d[2] * b_vec3
}
```

Here, n_vec3, t_vec3, and b_vec3 are three-dimensional vectors (in the Cartesian coordinate system) corresponding to the axes of a local coordinate system of a target region with reduced fluctuations. For example, a vector in the coordinate system used for decoding is derived from the previous coordinate system and the current coordinate system as follows.

$$n\_vec3 = (w * n\_vec3 + (WT - w) * n\_vec) >> wShift$$

$$t\_vec3 = (w * t\_vec3 + (WT - w) * t\_vec) >> wShift$$

$$b\_vec3 = (w * b\_vec3 + (WT - w) * b\_vec) >> wShift$$

Here, for example, wShift = 2, 3, 4, WT = 1 << wShift, and w = 1 .. WT - 1. For example, in a case that w = 3 and wShift = 3,

$$n\_vec3 = (3 * n\_vec3 + 5 * n\_vec) >> 3$$

$$t\_vec3 = (3 * t\_vec3 + 5 * t\_vec) >> 3$$

$$b\_vec3 = (3 * b\_vec3 + 5 * b\_vec) >> 3$$

The vectors may be selected according to the value of coordinate system conversion information displacementCoordinateSystem decoded from encoded data as in the following configuration.

```
if (displacementCoordinateSystem == 0) {
  disp = d
} else if (displacementCoordinateSystem == 1){
  disp = d[0] * n_vec + d[1] * t_vec + d[2] * b_vec
} else if (displacementCoordinateSystem == 6){
  disp = d[0] * n_vec3 + d[1] * t_vec3 + d[2] * b_vec3
}
```

Decoding of Base Mesh

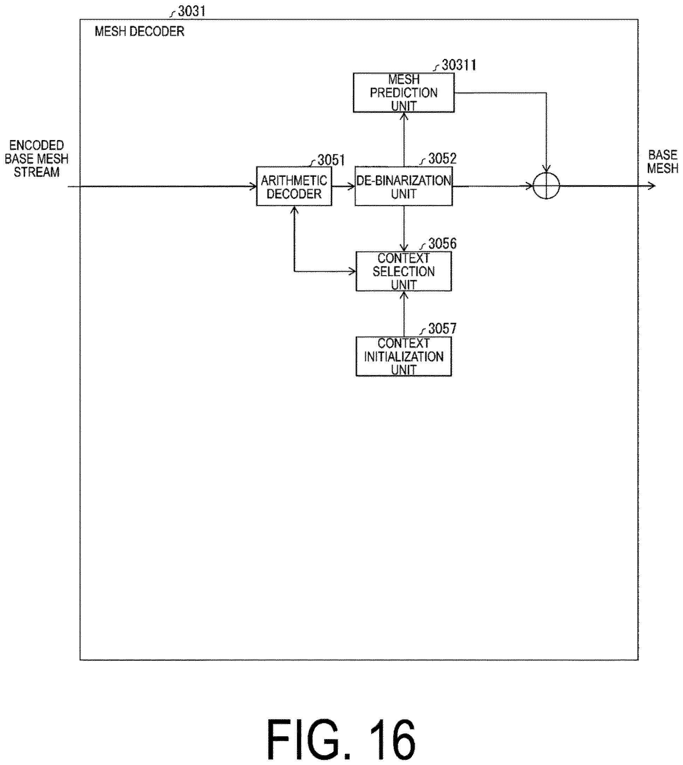

FIG. 16 is a functional block diagram illustrating a configuration of the mesh decoder 3031. The mesh decoder 3031 includes a mesh prediction unit 30311 and a CABAC decoder (the arithmetic decoder 3051, the de-binarization unit 3052, the context selection unit 3056, and the context initialization unit 3057).

Syntax Structure of Base Mesh

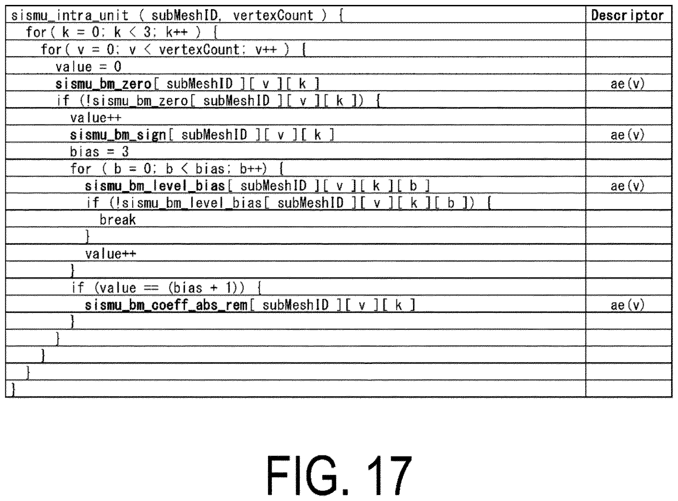

FIG. 17 is an example of a syntax structure of the base mesh (a vertex position vector prediction residual, a base mesh vertex position vector). The semantics are as follows.

sismu_bm_zero[subMeshID][v][k]: This indicates whether the k-component of the position vector prediction residual (coefficient) of the vertex with the index v in the submesh subMeshID is 0. In a case of being 0, the value is 1, and otherwise the value is 0.

sismu_bm_sign[subMeshID][v][k]: This indicates whether the k-component of the position vector prediction residual (coefficient) of the vertex with the index v in the submesh subMeshID is a positive number. For example, in a case of being a positive number, the value is 1, and otherwise (in a case of being a negative number) the value is 0. In a case that this syntax element is not present, the value is inferred to be 1.

sismu_bm_level_bias[subMeshID][v][k][b]: This indicates presence or absence of a bias at level b of the k-component of the position vector prediction residual (coefficient) of the vertex with the index v in the submesh subMeshID. In a case of absence of the bias, the value is 0, and otherwise the value is 1. In a case that this syntax element is not present, the value is inferred to be 0.

sismu_bm_coeff_abs_rem[subMeshID][v][k]: This indicates a value obtained by subtracting 4 from the absolute value of the k-component of the position vector prediction residual (coefficient) of the vertex with the index v in the submesh subMeshID. In a case that this syntax element is not present, the value is inferred to be 0.

The mesh decoder 3031 decodes sismu_bm_zero for each vertex of the submesh and for each component k, and decodes sismu_bm_sign and subsequent sismu_bm_level_bias in a case that sismu_bm_zero is a prescribed value (for example, 0).

In a case that the absolute value of the coordinates (coefficient) of the vertex is equal to or greater than the prescribed value (for example, 4), the mesh decoder 3031 decodes sismu_bm_coeff_abs_rem for each vertex of the submesh and for each component k.

The semantics of sismu_bm_level_bias[subMeshID][v][k][b] may be defined as follows.

sismu_bm_level_bias[subMeshID][v][k][b]: This indicates whether the absolute value of the k-component of the position vector prediction residual of the vertex with the index v in the submesh subMeshID is greater than b + 1. Note that "gt" indicating "greater than" may be used instead of "bias". In a case of being greater, the value is 1, and otherwise the value is 0. In a case that this syntax element is not present, the value is inferred to be 0.

Operation of Mesh Decoder

The mesh prediction unit 30311 predicts a position vector of the current vertex based on a position vector of a decoded vertex, and derives a prediction position vector BmVertexPosPred.

Basic operation of the CABAC decoder (the arithmetic decoder 3051, the de-binarization unit 3052, the context selection unit 3056, and the context initialization unit 3057) is similar to the operation of the CABAC decoder of the mesh displacement decoder 305. In arithmetic decoding of the position vector prediction residual (coefficient) of each vertex, the following different context arrays may be used depending on a component (dimension) of the vertex position vector or the like. The context includes a variable indicating the probability of occurrence of a binary signal.

```
ctxBmZero
ctxBmLevelBias[2][numLevel]
ctxBmCoeffRemPrefix[numPrefixBin]
```

Here, numLevel is the number of levels of the bias using a context, and may be a fixed value, for example, numLevel may be 2. numPrefixBin is the number of bins using a context in the prefix, and numPrefixBin may be 2.

ctxBmZero is a context used to decode the syntax element sismu_bm_zero. The arithmetic decoder 3051 decodes sismu_bm_zero, using the value of ctxBmZero. sismu_bm_zero may be referred to as sismu_bm_sigcoeff.

The arithmetic decoder 3051 decodes sismu_bm_sign without using a context (using a bypass).

ctxBmLevelBias[2][numLevel] is an array of contexts used to decode the syntax element sismu_bm_level_bias. The arithmetic decoder 3051 decodes sismu_bm_level_bias at the level b, using the value of ctxBmLevelBias[0][min(b, numLevel - 1)] or ctxBmLevelBias[1][min(b, numLevel - 1)].

ctxBmCoeffRemPrefix[numPrefixBin] is an array of contexts used to decode the syntax element sismu_bm_coeff_abs_rem. ctxBmCoeffRemPrefix[bin] indicates the context at the bin position in binarization of the prefix of sismu_bm_coeff_abs_rem. The arithmetic decoder 3051 decodes each bin of the prefix of sismu_bm_coeff_abs_rem of the vertex vector, using the value of ctxBmCoeffRemPrefix[bin].

The arithmetic decoder 3051 decodes each bin of the suffix of sismu_bm_coeff_abs_rem of the vertex position vector without using a context (using a bypass).

As another configuration, a context may also be used for the suffix of sismu_bm_coeff_abs_rem.

ctxBmCoeffRemSuffix[numSuffixBin] is an array of contexts used to decode the syntax element sismu_bm_coeff_abs_rem. numSuffixBin is the number of bins using a context in the suffix, and numSuffixBin may be 2. ctxBmCoeffRemSuffix[bin] indicates the context at the bin position in binarization of the suffix of sismu_bm_coeff_abs_rem. The arithmetic decoder 3051 decodes each bin of the suffix of sismu_bm_coeff_abs_rem of the vertex position vector, using the value of ctxBmCoeffRemSuffix[bin]. (Equation-1) described below may be expressed as (Equation-2).

$$\text{value} \mathrel{+}= \text{decodeExpGolomb(ctxBmCoeffRemPrefix)} \quad \text{(Equation-1)}$$

$$\text{value} \mathrel{+}= \text{decodeExpGolomb(ctxBmCoeffRemPrefix, ctxBmCoeffRemSuffix)} \quad \text{(Equation-2)}$$

Processing of Deriving Mesh

The mesh decoder 3031 decodes the syntax elements sismu_bm_zero, sismu_bm_sign, sismu_bm_level_bias, and sismu_bm_coeff_abs_rem from encoded data, and derives a vertex position vector prediction residual BmVertexPosPredResidual of the base mesh, by using the following processing.

```
islow = 1
bias = 3
level = 2
for (k = 0; k < 3; k++) { // dimension (component) loop
  for (v = 0; v < vertexCount; v++) { // vertex loop
    value = 0
    // decode sismu_bm_zero
    sismu_bm_zero[subMeshID][v][k] = decode(ctxBmZero)
    if (!sismu_bm_zero[subMeshID][v][k]) {
      value++
      // decode sismu_bm_sign
      sismu_bm_sign[subMeshID][v][k] = decode_bypass()
      for (b = 0; b < bias; b++) { // bias loop
        // decode sismu_bm_level_bias
        sismu_bm_level_bias[subMeshID][v][k][b]
          = decode(ctxBmLevelBias[islow][min(b, level - 1)])
        if (!sismu_bm_level_bias[subMeshID][v][k][b]) {
          break
        }
        value++
      }
      islow = value < (bias + 1)
    } else {
      islow = 1
    }
    if (value == (bias + 1)) {
      // decode sismu_bm_coeff_abs_rem
      value += decodeExpGolomb(ctxBmCoeffRemPrefix)
    }
    if (sismu_bm_sign[subMeshID][v][k]) {
      value = -value

    }
    BmVertexPosPredResidual[subMeshID][v][k] = value
  }
}
```

break in pseudocode means skipping the following operation and exiting the latest loop.

Note that, although the derivation processing is performed in order of a dimension (component) loop and a vertex loop, the derivation processing may be performed in order of a vertex loop and a dimension (component) loop. A method related to the sign of the coefficient may be the following arithmetic operation, in addition to a method (value = - value) of inversion in accordance with the value of the above syntax sismu_bm_sign[subMeshID][v][k].

$$BmVertexPosPredResidual[subMeshID][v][k] = (1 - 2 *$$

$$sismu\_bm\_sign[subMeshID][v][k]) * value$$

Alternatively, the following may be used, which has an inverted sign.

$$BmVertexPosPredResidual[subMeshID][v][k] = (2 *$$
$$sismu\_bm\_sign[subMeshID][v][k] - 1) * value$$

The mesh decoder 3031 derives a base mesh vertex position vector BmVertexPos by using the following processing.

$$BmVertexPos = BmVertexPosPred + BmVertexPosPredResidual$$

Alternatively, the following expression may be used.

$$BmVertexPos[subMeshID][v][k] = BmVertexPosPred[subMeshID][v][k] +$$
$$BmVertexPosPredResidual[subMeshID][v][k] \ k = 0 \ ..$$

Configuration Using Context for Some Bins of Prefix/Suffix

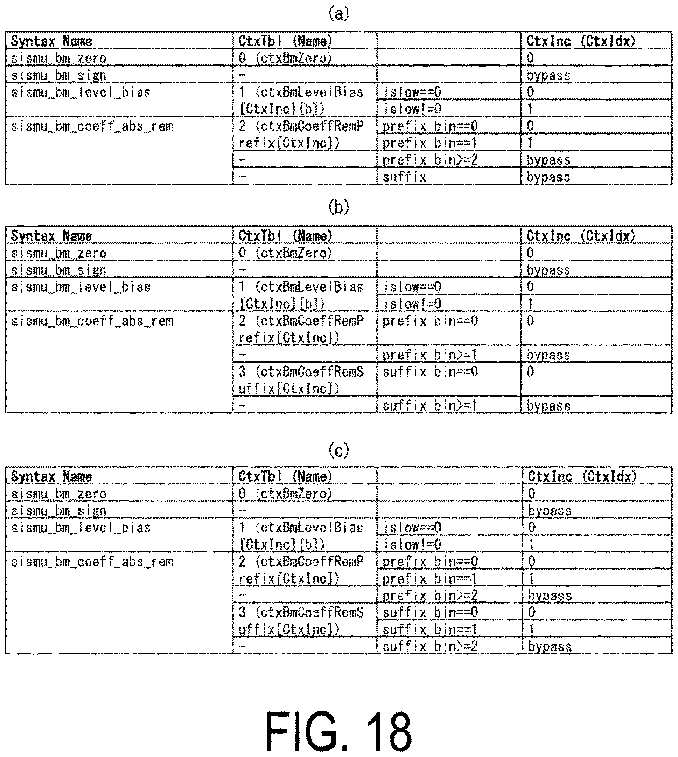

FIG. 18 illustrates a configuration of a context used by the mesh decoder 3031. The mesh decoder 3031 (context selection unit 3056) decodes sismu_bm_zero and sismu_bm_level_bias using a context. The mesh decoder 3031 (context selection unit 3056) decodes sismu_bm_sign without using a context (using a bypass). The mesh decoder 3031 (context selection unit 3056) decodes a part of the beginning of the prefix of sismu_bm_coeff_abs_rem using a context, decodes the rest of the prefix using a bypass, and decodes the suffix using a bypass. In particular, prefix bin = 0 and prefix bin = 1 may be decoded using different contexts, and prefix bin >= 2 and the subsequent parts of the prefix may be decoded using a bypass (FIG. 18(a)). Alternatively, a part of the beginning of the suffix may be decoded using a context. In particular, prefix bin = 0 may be decoded using a context, prefix bin >= 1 may be decoded using a bypass, suffix bin = 0 may be decoded using a context, and suffix bin >= 1 may be decoded using a bypass (FIG. 18(b)). Alternatively, prefix bin = 0 and prefix bin = 1 may be decoded using different contexts, prefix bin >= 2 and the subsequent parts of the prefix may be decoded using a bypass, suffix bin = 0 and suffix bin = 1 may be decoded using different contexts, and suffix bin >= 2 and the subsequent parts of the suffix may be decoded using a bypass (FIG. 18(c)). According to the above, only up to four contexts are used even in a case that a value to be ExpGolomb-coded increases, and thus this enables a reduction in complexity compared to a case that contexts are used in all bins for the remainder (sismu_bm_coeff_abs_rem). This enables encoding with higher efficiency than a case that a bypass is used in all bins of sismu_bm_coeff_abs_rem.

In FIG. 18, a context ctxBmZero with CtxTbl = 0 is used to decode sismu_bm_zero. A context ctxBmLevelBias [CtxInc][b] (CtxInc is replaced with islow) with CtxTbl = 1 is used to decode sismu_bm_level_bias. A context ctxBmCoeffRemPrefix[CtxInc] (CtxInc is replaced with a prefix bin position bin) with CtxTbl = 2 is used to decode the prefix of sismu_bm_coeff_abs_rem. A context ctxBmCoeffRemSuffix[CtxInc] (CtxInc is replaced with suffix bin) with CtxTbl = 3 is used to decode the suffix of sismu_bm_coeff_abs_rem.

Configuration Limiting Number of Context-Encoded Bins to Be Decoded

In order to reduce complexity of context encoding, the number of context-encoded bins may be limited. Specifically, the mesh decoder 3031 (context selection unit 3056) counts the number of bins decoded using context encoding in the syntax element of sismu_bm_coeff_abs_rem in prescribed units or for each prescribed number of vertices (one in every vertexSize). In a case that the value is equal to or greater than a prescribed value maxContextIn Vertices, each bin of sismu_bm_coeff_abs_rem may be switched from decoding using a context to decoding without using a context (using a bypass or a static context). Pseudocode of this example is indicated below.

```
islow = 1
bias = 3
level = 2
for (k = 0; k < 3; k++) { // dimension (component) loop
  for (v = 0; v < vertexCount; v++) { // vertex loop
    if ((v % vertexSize) == 0) countCtx = 0
    value = 0
    // decode sismu_bm_zero
    sismu_bm_zero[subMeshID][v][k] = decode(ctxBmZero)
    if (!sismu_bm_zero[subMeshID][v][k]) {
      value++
      // decode sismu_bm_sign
      sismu_bm_sign[subMeshID][v][k] = decode_bypass()
      for (b = 0; b < bias; b++) { // bias loop
        // decode sismu_bm_level_bias
        sismu_bm_level_bias[subMeshID][v][k][b]
          = decode(ctxBmLevelBias[islow][min(b, level - 1)])
        if (!sismu_bm_level_bias[subMeshID][v][k][b]) {
          break
        }
        value++
      }
      islow = value < (bias + 1)
    } else {
      islow = 1
    }
    if (value == (bias + 1)) {
      // decode sismu_bm_coeff_abs_rem
      if (countCtx < maxContextInVertices) {
        value += decodeExpGolomb(ctxBmCoeffRemPrefix)
        countCtx += 2
      } else {
        value += decodeExpGolomb(ctxStatic)
      }
    }
    if (sismu_bm_sign[subMeshID][v][k]) {
      value = -value
    }
    BmVertexPosPredResidual[subMeshID][v][k] = value
  }
}
```

According to the above, the maximum number of context-encoded bins (worst case) can be reduced.

Reconstruction of Mesh

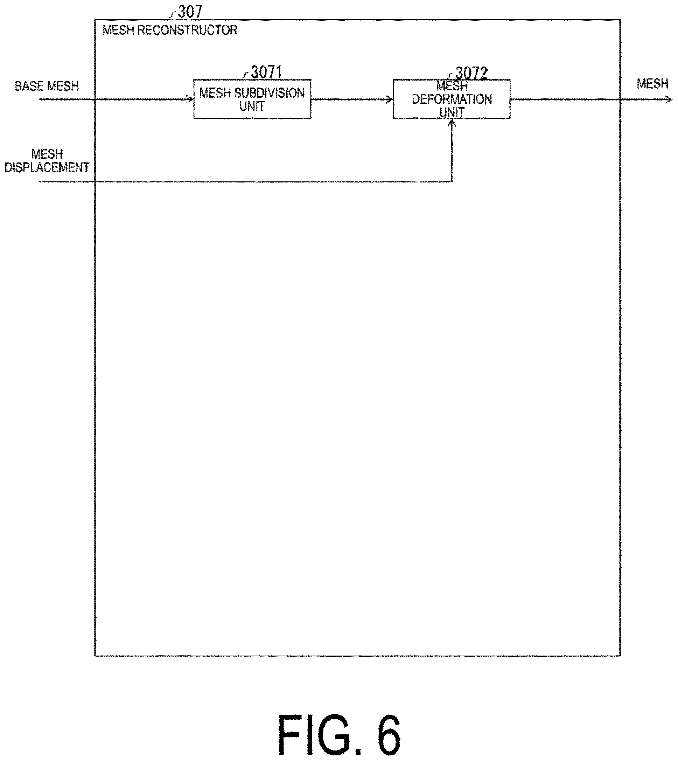

FIG. 6 is a functional block diagram illustrating a configuration of the mesh reconstructor 307. The mesh reconstructor 307 includes a mesh subdivision unit 3071 and a mesh deformation unit 3072.

The mesh subdivision unit 3071 subdivides a base mesh output from base mesh decoder 303 to generate a subdivided mesh.

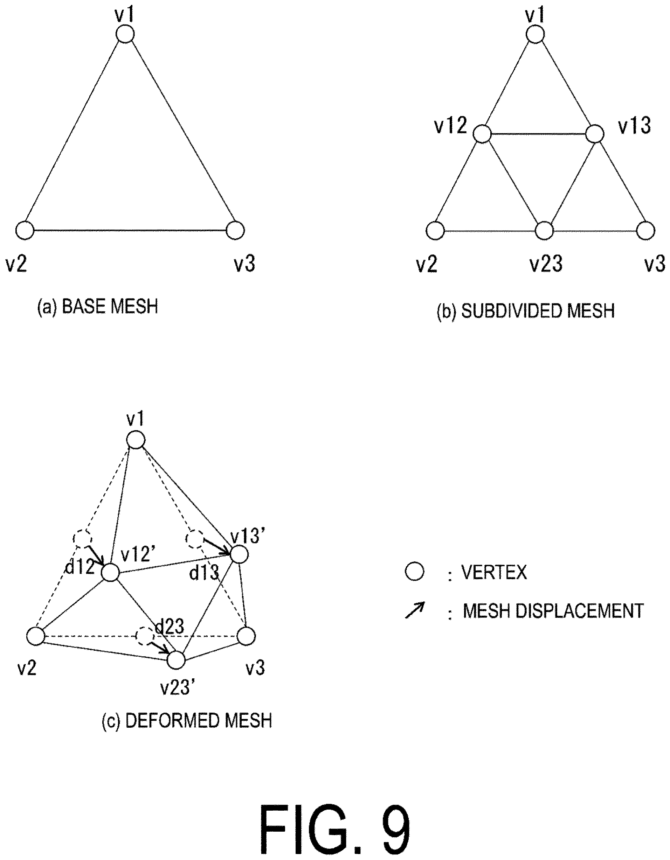

FIG. 9(a) illustrates a part (triangle) of the base mesh, and the triangle includes vertices v1, v2, and v3. v1, v2, and v3 are three-dimensional vectors. The mesh subdivision unit 3071 generates subdivided meshes by adding new vertices v12, v13, and v23 to the middle of the respective sides of the triangle, and outputs the subdivided meshes (FIG. 9(b)).

$$v12 = (v1 + v2)/2$$

$$v13 = (v1 + v3)/2$$

$$v23 = (v2 + v3)/2$$

The following may also be used.

$$v12 = (v1 + v2 + 1) >> 1$$

$$v13 = (v1 + v3 + 1) >> 1$$

$$v23 = (v2 + v3 + 1) >> 1$$

The mesh deformation unit 3072 receives the subdivided meshes and mesh displacements, generates a deformed mesh by adding the mesh displacements d12, d13, and d23, and outputs the deformed mesh (FIG. 9(c)). The mesh displacements d12, d13, and d23 are the output of the mesh displacement decoder 305 (the coordinate system conversion unit 3055). The mesh displacements d12, d13, and d23 are mesh displacements corresponding to the vertices v12, v13, and v23 added by the mesh subdivision unit 3071.

$$v12' = v12 + d12$$

$$v13' = v13 + d13$$

$$v23' = v23 + d23$$

Note that d12 = disp[0][], d13 = disp[1][], and d23 = disp[3][] may be satisfied.

Configuration of 3D Data Encoding Apparatus According to First Embodiment

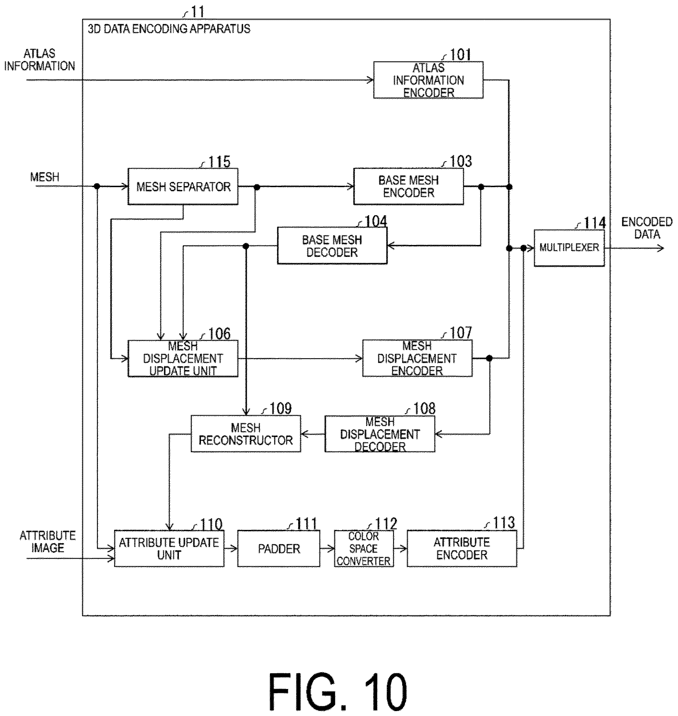

FIG. 10 is a functional block diagram illustrating a configuration of the 3D data encoding apparatus 11 according to the first embodiment. The 3D data encoding apparatus 11 includes an atlas information encoder 101, a base mesh encoder 103, a base mesh decoder 104, a mesh displacement update unit 106, a mesh displacement encoder 107, a mesh displacement decoder 108, a mesh reconstructor 109, an attribute update unit 110, a padder 111, a color space converter 112, an attribute encoder 113, a multiplexer 114, and a mesh separator 115. The 3D data encoding apparatus 11 receives atlas information, a base mesh, mesh displacements, a mesh, and an attribute image as 3D data and outputs encoded data.

The atlas information encoder 101 encodes the atlas information and outputs an encoded atlas information stream.

The base mesh encoder 103 encodes the base mesh and outputs an encoded base mesh stream. Draco or the like is used as an encoding scheme.

The base mesh decoder 104 is similar to the base mesh decoder 303 and thus description thereof will be omitted.

The mesh displacement update unit 106 adjusts the mesh displacements based on the (original) base mesh and the decoded base mesh and outputs the updated mesh displacement.

The mesh displacement encoder 107 encodes the updated mesh displacements and outputs an encoded mesh displacement stream.

The mesh displacement decoder 108 is similar to the mesh displacement decoder 305 and thus description thereof will be omitted.

The mesh reconstructor 109 is similar to the mesh reconstructor 307 and thus description thereof will be omitted.

The attribute update unit 110 receives the (original) mesh, the reconstructed mesh output from the mesh reconstructor 109 (the mesh deformation unit 3072), and the attribute image and updates the attribute image to match the positions (coordinates) of the reconstructed mesh and outputs the updated attribute image.

The padder 111 receives the attribute image and performs padding processing on an area where pixel values are empty.

The color space converter 112 performs color space conversion from an RGB format to a YCbCr format.

The attribute encoder 113 encodes the YCbCr-format attribute image output from the color space converter 112 and outputs an attribute video stream. VVC, HEVC, or the like is used as an encoding scheme.

The multiplexer 114 multiplexes the encoded atlas information stream, the encoded base mesh stream, the encoded mesh displacement stream, and the attribute video stream and outputs the multiplexed data as encoded data. A byte stream format, the ISOBMFF, or the like is used as a multiplexing method.

Operation of Mesh Separator

The mesh separator 115 generates a base mesh and mesh displacements from a mesh.

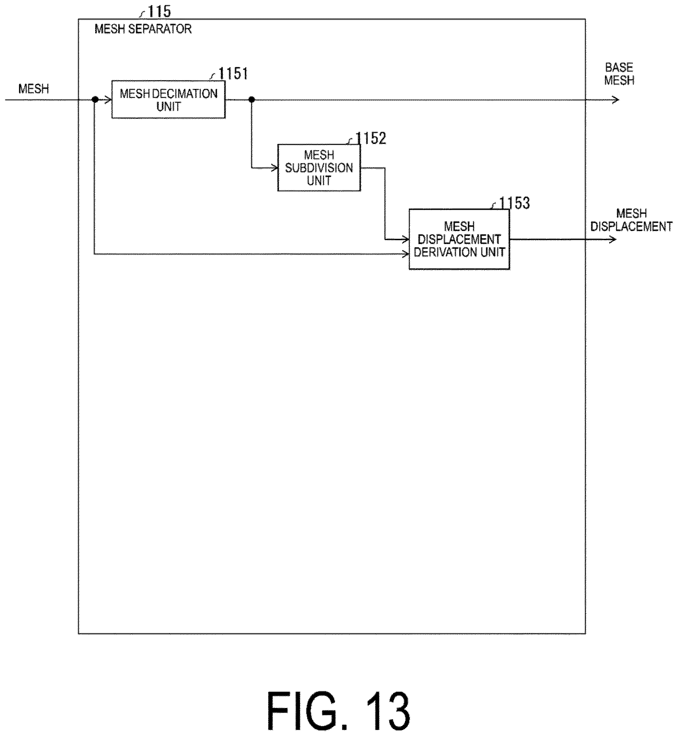

FIG. 13 is a functional block diagram illustrating a configuration of the mesh separator 115. The mesh separator 115 includes a mesh decimation unit 1151, a mesh subdivision unit 1152, and a mesh displacement derivation unit 1153.

The mesh decimation unit 1151 generates a base mesh by removing some vertices from the mesh.

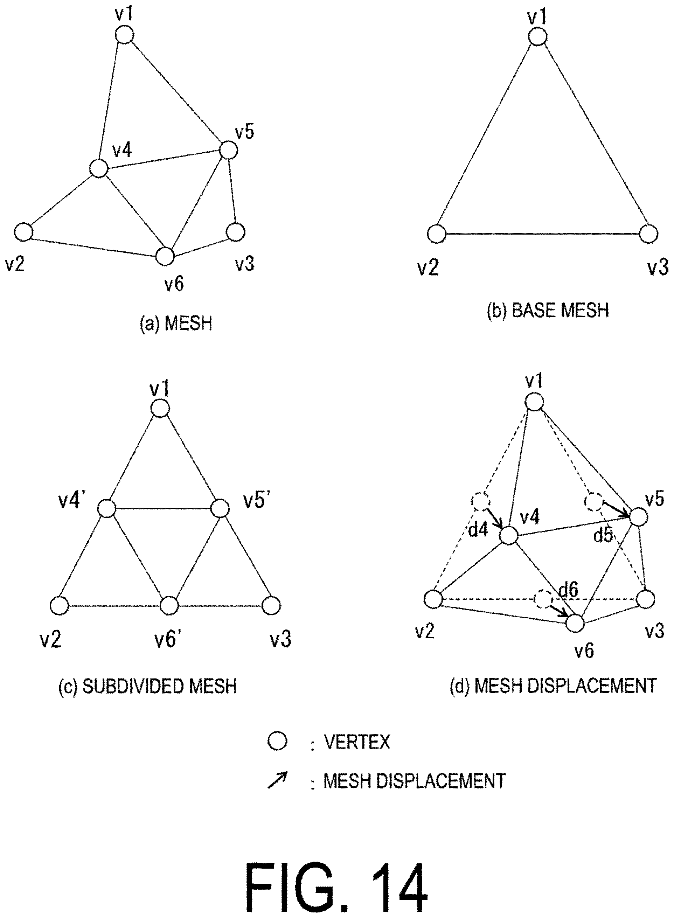

FIG. 14(a) illustrates a part of a mesh, and the mesh includes vertices v1, v2, v3, v4, v5, and v6. v1, v2, v3, v4, v5, and v6 are three-dimensional vectors. The mesh decimation unit 1151 generates a base mesh by decimating the vertices v4, v5, and v6 (FIG. 14 b).

Like the mesh subdivision unit 3071, the mesh subdivision unit 1152 subdivides the base mesh to generate a subdivided mesh (FIG. 14(c)).

$$v4' = (v1 + v2)/2$$

$$v5' = (v1 + v3)/2$$

$$v6' = (v2 + v3)/2$$

Based on the mesh and the subdivided mesh, the mesh displacement derivation unit derives, as mesh displacements, displacements d4, d5, and d6 of the vertexes v4, v5, and v6 with respect to the vertexes v4', v5', and v6' and outputs the displacements d4, d5, and d6 (FIG. 14(d)).

$$d4 = v4 - v4'$$

$$d5 = v5 - v5'$$

$$d6 = v6 - v6'$$

Base Mesh Encoding

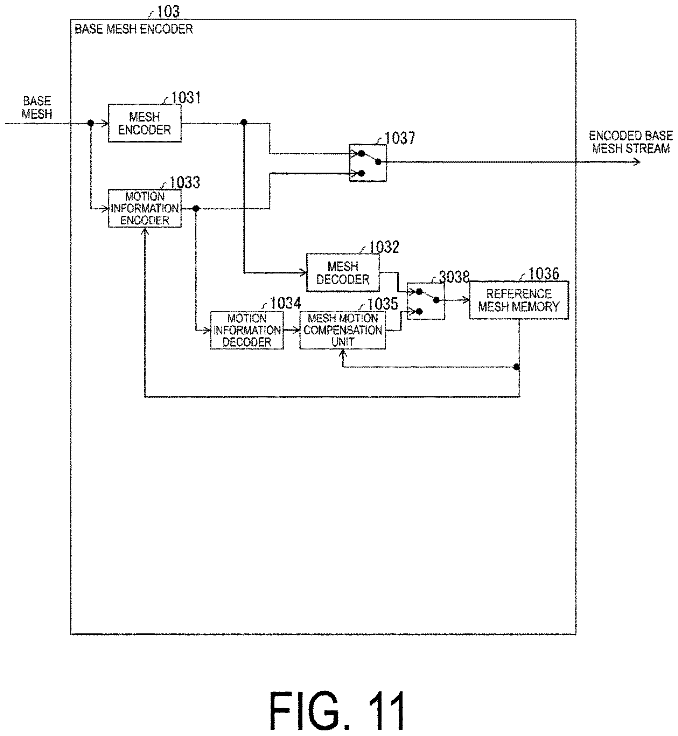

FIG. 11 is a functional block diagram illustrating a configuration of the base mesh encoder 103. The base mesh encoder 103 includes a mesh encoder 1031, a mesh decoder 1032, a motion information encoder 1033, a motion information decoder 1034, a mesh motion compensation unit 1035, a reference mesh memory 1036, a switch 1037, and a switch 1038. The base mesh encoder 103 may include a base mesh quantization unit (not illustrated) after the input of a base mesh. Each of the switches 1037 and 1038 is connected to the side where no motion compensation is performed in a case that the base mesh is to be encoded (intra-encoded) without reference to other base meshes (for example, base meshes that have already been encoded). On the other hand, each of the switches 1037 and 1038 is connected to the side where motion compensation is performed in a case that the base mesh is to be encoded (inter-encoded) with reference to another base mesh.

The mesh encoder 1031 has an intra encoding function and intra-encodes the base mesh, and outputs an encoded base mesh stream. Draco or the like is used as an encoding scheme.

The mesh decoder 1032 is similar to the mesh decoder 3031 and thus description thereof will be omitted.

The motion information encoder 1033 has an inter-encoding function and inter-encodes the base mesh and outputs an encoded base mesh stream. Entropy encoding such as arithmetic encoding is used as an encoding scheme.

The motion information decoder 1034 is similar to the motion information decoder 3032 and thus description thereof will be omitted.

The mesh motion compensation unit 1035 is similar to the mesh motion compensation unit 3033 and thus description thereof will be omitted.

The reference mesh memory 1036 is similar to the reference mesh memory 3034 and thus description thereof will be omitted.

Encoding of Mesh Displacements

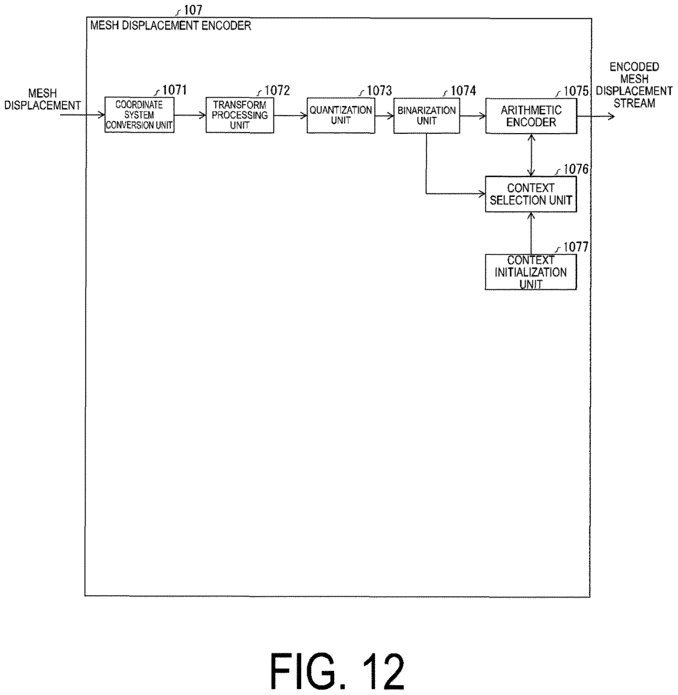

FIG. 12 is a functional block diagram illustrating a configuration of the mesh displacement encoder 107. The mesh displacement encoder 107 includes a coordinate system converter 1071, a transform processing unit 1072, a quantization unit 1073, a binarization unit 1074, an arithmetic encoder 1075, a context selection unit 1076, and a context initialization unit 1077.

Based on the value of the coordinate system conversion information displacementCoordinateSystem, the coordinate system converter 1071 converts the coordinate system of the mesh displacement from the Cartesian coordinate system to a coordinate system (for example, a local coordinate system) in which the displacement is encoded. Here, disp is a three-dimensional vector indicating a mesh displacement before coordinate system conversion, d is a three-dimensional vector indicating a mesh displacement after coordinate system conversion, and n_vec, t_vec, and b_vec are three-dimensional vectors (in the Cartesian coordinate system) corresponding to the axes of the local coordinate system.

$$\text{if (displacementCoordinateSystem == 0) \{}$$
$$d = disp$$
$$\text{\} else if (displacementCoordinateSystem == 1)\{}$$
$$d = (disp * n\_vec, disp * t\_vec, disp * b\_vec)$$
$$\text{\}}$$

The mesh displacement encoder 107 may update the value of displacementCoordinateSystem at the sequence level. Alternatively, the value may be updated at the picture/frame level. The initial value is 0, indicating the Cartesian coordinate system.

In a case that displacementCoordinateSystem is updated at the sequence level, the syntax of the configuration of FIG. 7 is used. asps_vdmc_ext_displacement_coordinate_system is set equal to 0 in a case of the Cartesian coordinate system and is set equal to 1 in a case of the local coordinate system.

In a case that displacementCoordinateSystem is changed at a picture/frame level, the syntax of the configuration of FIG. 8 is used. afps_vdmc_ext_displacement_coordinate_system_enable_flag is set equal to 1 in a case that the coordinate system is updated and is set equal to 0 in a case that the coordinate system is not updated. afps_vdmc_ext_displacement_coordinate_system is set to 0 in a case of the Cartesian coordinate system and is set equal to 1 in a case of the local coordinate system.

The transform processing unit 1072 performs transform f (for example, wavelet transform) and derives a transformed mesh displacement Tdisp.

$$Tdisp[0][] = f(d[0][])$$

$$Tdisp[1][] = f(d[1][])$$

$$Tdisp[2][] = f(d[2][])$$

The quantization unit 1073 performs quantization based on a quantization scale value "scale" derived from the quantization parameter of each component of mesh displacements to derive a quantized mesh displacement Qdisp.

$$Qdisp[0][] = Tdisp[0][]/scale[0]$$

$$Qdisp[1][] = Tdisp[1][]/scale[1]$$

$$Qdisp[2][] = Tdisp[2][]/scale[2]$$

Alternatively, the scale value may be approximated by a power of 2 and Qdisp may be derived using the following formula.

$$scale[i] = 1 << scale2[i]$$

$$Qdisp[0][] = Tdisp[0][] >> scale2[0]$$

$$Qdisp[1][] = Tdisp[1][] >> scale2[1]$$

$$Qdisp[2][] = Tdisp[2][] >> scale2[2]$$

The binarization unit 1074 encodes the quantized mesh displacement Qdisp, which is a multi-valued signal, into a binary signal. The binary signal may be a k-th order exponential Golomb code.

The arithmetic encoder 1075 performs arithmetic encoding on the binary signal and outputs a mesh displacement encoding stream.

The context selection unit 1076 is similar to the context selection unit 3056, and thus description of the context selection unit 1076 will be omitted.

Note that a static context with a fixed probability without context update is referred to as a ctxStatic. The syntax element indicated by ctxStatic may be encoded without using a context. encode(ctxStatic) may use dedicated processing for bypass as encode_bypass().

The context initialization unit 1077 is similar to the context initialization unit 3057, and thus description of the context initialization unit 1077 will be omitted.

An example in which contexts are used will be described here. However, some syntax elements may be bypass-encoded without using a context. A configuration performing bypass encoding is effective in reducing the memory for contexts and the amount of processing.

For example, the syntax elements diu_last_sig_coeff, diu_coded_block_flag, diu_coeff_abs_level_rem may be bypass-encoded without using a context. Bypass-encoding these syntax elements is effective in reducing the memory for contexts and the amount of processing, while maintaining the encoding efficiency.

The mesh displacement encoder 107 encodes the mesh displacement Qdisp by the following processing.

```
for (k = 0; k < numDim; k++) { // dimension (component) loop
  // encode diu_last_sig_coeff
  encodeExpGolomb(diu_last_sig_coeff[k], ctxStatic)
  if (!lastSig) continue
  dispOffset = 0
  for (b = 0; b <numLOD; b++) { // Level of Detail loop, block loop
    // encode diu_coded_block_flag
    encode(diu_coded_block_flag[k][b], ctxStatic)
    numBlocks = dispCount[b] / subBlockSize + 1
    for (s = 0; s < numBlocks; s++) { // subblock loop
      // encode diu_coded_subblock_flag
      encode(diu_coded_subblock_flag[k][b][s], ctxCodedSubBlock[ft][b][k])
      for (v = 0; v < subBlockSize; v++) { // coefficient loop within subblock

        // encode diu_coeff_abs_level_gt0
        d = Qdisp[dispOffset + s * subBlockSize + v][k]
        encode(d != 0, ctxCoeffGtN[ft][b][0][k])
        if (!d) continue
        // encode diu_coeff_sign
        encode(d < 0, ctxStatic)
        d = abs(d) - 1
        // encode diu_coeff_abs_level_gt1
        encode(d != 0, ctxCoeffGtN[ft][b][1][k])
        if (!d) continue
        d = abs(d) - 1
        // encode diu_coeff_abs_level_gt2
        encode(d != 0, ctxCoeffGtN[ft][b][2][k])
        if (!d) continue
        d = abs(d) - 1
        // encode diu_coeff_abs_level_gt3
        encode(d != 0, ctxCoeffGtN[ft][b][3][k])
        if (!d) continue
        // encode diu_coeff_abs_level_rem
        encodeExpGolomb(--d, ctxCoeffRemPrefix[ft][b][k])
      }
    }
    dispOffset += dispCount[b]
  }
}
```

continue in pseudocode means skipping the following operation and jumping to the beginning of the loop (next iteration).

Here, encode() and encodeExpGolomb() are functions for arithmetically encoding a 1-bit value and a binary string of the k-th order Golomb code with values and corresponding contexts being arguments, respectively. dispCount[b] is the number of mesh displacements of the detail level b. lastSig is a flag indicating whether the current coefficient is the last non-zero coefficient in the subblock in scan order. lastSig = 0 indicates that the current coefficient is not the last non-zero coefficient in the subblock in scan order. lastSig = 1 indicates that the current coefficient is the last non-zero coefficient in the subblock in scan order.

Base Mesh Encoding

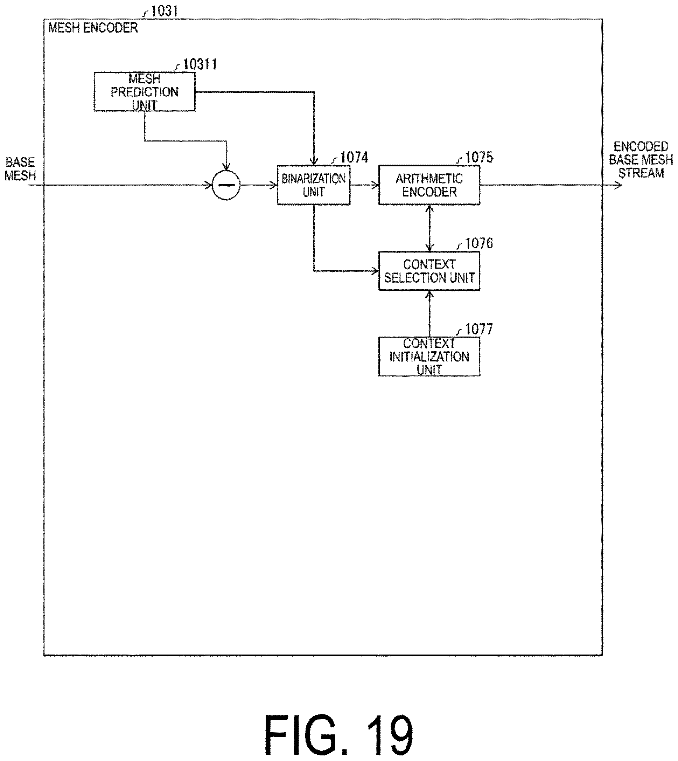

FIG. 19 is a functional block diagram illustrating a configuration of the mesh encoder 1031. The mesh encoder 1031 includes a mesh prediction unit 10311, a binarization unit 1074, an arithmetic encoder 1075, a context selection unit 1076, and a context initialization unit 1077.

The mesh prediction unit 10311 is similar to the mesh prediction unit 30311, and thus description of the motion information prediction unit 10331 will be omitted.

The mesh encoder 1031 encodes the vertex position vector prediction residual BmVertexPosPredResidual (= BmVertexPos - BmVertexPosPred) of the base mesh by using the following processing.

```
islow = true
bias = 3
level = 2
for (k = 0; k < 3; k++) { // dimension (component) loop
  for (v = 0; v < vertexCount; v++) { // vertex loop
    value = BmVertexPosPredResidual[subMeshID][v][k]
    iszero = (value == 0)
    // encode sismu_bm_zero
    encode(iszero, ctxBmZero)

    if (iszero) {
      islow = true
      continue
    }
    // encode sismu_bm_sign
    encode_bypass(value < 0)
    value = abs(value) - 1
    for (b = 0; b < bias; b++) { // bias loop
      if (value <= b) {
        encode(0, ctxBmLevelBias[islow][min(b, level - 1)]
        break
      }
      encode(1, ctxBmLevelBias[islow][min(b, level - 1)]
    }
    islow = value < bias
    if (value >= bias) {
      encodeExpGolomb(value - bias, ctxBmCoeffRemPrefix)
    }
  }
}
```

Although embodiments of the present invention have been described above in detail with reference to the drawings, the specific configurations thereof are not limited to those described above and various design changes or the like can be made without departing from the spirit of the invention.

Application Example

The 3D data encoding apparatus 11 and the 3D data decoding apparatus 31 described above can be used by being installed in various apparatuses that transmit, receive, record, and reproduce 3D data. Note that the 3D data may be natural 3D data captured by a camera or the like or may be artificial 3D data (including CG and GUI) generated by a computer or the like.

An embodiment of the present invention is not limited to the embodiments described above and various changes can be made within the scope indicated by the claims. That is, embodiments obtained by combining technical means appropriately modified within the scope indicated by the claims are also included in the technical scope of the present invention.

Industrial Applicability

Embodiments of the present invention are suitably applicable to a 3D data decoding apparatus that decodes encoded data into which 3D data has been encoded and a 3D data encoding apparatus that generates encoded data into which 3D data has been encoded. The present invention is also suitably applicable to a data structure for encoded data generated by a 3D data encoding apparatus and referenced by a 3D data decoding apparatus.

Reference Signs List

11 3D data encoding apparatus
101 Atlas information encoder
103 Base mesh encoder
1031 Mesh encoder
10311 Mesh prediction unit
1032 Mesh decoder
1033 Motion information encoder
1034 Motion information decoder
1035 Mesh motion compensation unit
1036 Reference mesh memory
1037 Switch
1038 Switch
104 Base mesh decoder
106 Mesh displacement update unit
107 Mesh displacement encoder
1071 Coordinate system conversion unit
1072 Transform processing unit
1073 Quantization unit
1074 Binarization unit
1075 Arithmetic encoder
1076 Context selection unit
1077 Context initialization unit
108 Mesh displacement decoder
109 Mesh reconstructor
110 Attribute update unit
111 Padder
112 Color space converter
113 Attribute encoder
114 Multiplexer
115 Mesh separator
1151 Mesh decimation unit
1152 Mesh subdivision unit
1153 Mesh displacement derivation unit
21 Network
31 3D data decoding apparatus
301 Demultiplexer
302 Atlas information decoder
303 Base mesh decoder
3031 Mesh decoder
30311 Mesh prediction unit
3032 Motion information decoder
3033 Mesh motion compensation unit
3034 Reference mesh memory
3035 Switch
3036 Switch
305 Mesh displacement decoder
3051 Arithmetic decoder

3052 De-binarization unit
3053 Inverse quantization unit
3054 Inverse transform processing unit
3055 Coordinate system conversion unit
3056 Context selection unit
3057 Context initialization unit
307 Mesh reconstructor
306 Attribute decoder
3071 Mesh subdivision unit
3072 Mesh deformation unit
308 Color space converter
41 3D data display apparatus

**Claims**

1. A 3D data decoding apparatus for decoding encoded data, the 3D data decoding apparatus comprising:

   a mesh prediction unit configured to derive a prediction position of a base mesh vertex position from the encoded data; and
   an arithmetic decoder configured to arithmetically decode a prediction residual, wherein
   the arithmetic decoder decodes a part of a beginning of a prefix of an absolute value of a coefficient of the prediction residual by using a context, and adds the prediction position and the prediction residual to derive the base mesh vertex position.

2. The 3D data decoding apparatus according to claim 1, wherein
   the arithmetic decoder counts the number of bins of the prefix decoded using the context for each prescribed number of vertices, and decodes the bins of the prefix by switching from decoding using the context to decoding without using the context in a case that the number of the bins is equal to or greater than a prescribed value.

3. A 3D data encoding apparatus for encoding 3D data, the 3D data encoding apparatus comprising:

   a mesh prediction unit configured to derive a prediction position of a base mesh vertex position; and
   an arithmetic encoder configured to arithmetically encode a prediction residual, wherein
   the arithmetic encoder encodes a part of a beginning of a prefix of an absolute value of a coefficient of the prediction residual by using a context.

4. The 3D data encoding apparatus according to claim 3, wherein
   the arithmetic encoder counts the number of bins of the prefix encoded using the context for each prescribed number of vertices, and encodes the bins of the prefix by switching from encoding using the context to encoding without using the context in a case that the number of the bins is equal to or greater than a prescribed value.

1

T → **3D DATA ENCODING APPARATUS** ~11 → Te → (network 21) → Te → **3D DATA DECODING APPARATUS** ~31 → Td → **3D DATA DISPLAY APPARATUS** ~41

# FIG. 1

V3C sample stream:
| sample stream header | V3C unit#0 | V3C unit#1 | V3C unit#2 | V3C unit#3 | V3C unit#4 | V3C unit#5 | ----- | V3C unit#N-1 |

V3C unit stream:
| V3C unit#0 | V3C unit#1 | V3C unit#2 | V3C unit#3 | V3C unit#4 | V3C unit#5 | ------- | V3C unit#N-1 |

V3C VPS:
| Unit Type = V3C_VPS | V3C parameter set |

ATLAS DATA:
| UnitType =V3C_AD | VPS ID | atlasID | sample stream nal header | NAL unit #0 | NAL unit #1 | |

NAL unit:
| NAL UnitType | Layer ID | Temporal ID | RBSP (Raw byte sequence payload) |

RBSP (Raw byte sequence payload):
| ASPS #0 | AAPS #0 | ATL #0 | AFPS #0 | SEI #0 | --------- |

ATL (Atlas tile layer):
| ATL header | ATL data unit (patch information data etc.) |

SEI:
| payloadType | payloadSize | sei_payload | |

ATTRIBUTE DATA:
| UnitType =V3C_AVD | VPS ID | atlasID | attrIdx | partIdx | mapIdx | auxFlag | Video Stream |

GEOMETRY DATA:
| UnitType =V3C_GVD | VPS ID | atlasID | mapIdx | auxFlag | Video Stream |

OCCUPANCY DATA:
| UnitType =V3C_OVD | VPS ID | atlasID | Video Stream |

MESH DATA (BASE MESH):
| UnitType =V3C_MD | VPS ID | atlasID | mesh_payload |

# FIG. 2

FIG. 3

**FIG. 4**

FIG. 5

MESH RECONSTRUCTOR — 307

BASE MESH → MESH SUBDIVISION UNIT — 3071 → MESH DEFORMATION UNIT — 3072 → MESH

MESH DISPLACEMENT →

# FIG. 6

| atlas_sequence_parameter_set_rbsp( ) { | Descriptor |
|---|---|
| asps_atlas_frame_parameter_set_id | ue(v) |
| ... | |
| asps_extension_present_flag | u(1) |
| if( asps_extension_present_flag ) { | |
| asps_miv_extension_present_flag | u(1) |
| asps_vpcc_extension_present_flag | u(1) |
| asps_vdmc_extension_present_flag | u(1) |
| asps_extension_5bits | u(5) |
| } | |
| ... | |
| if( asps_vdmc_extension_present_flag ) | |
| asps_vdmc_extension( ) | |
| ... | |
| } | |

| asps_vdmc_extension( ) { | Descriptor |
|---|---|
| asps_vdmc_ext_subdivision_iteration_count | u(8) |
| asps_vdmc_ext_displacement_coordinate_system | u(3) |
| asps_vdmc_ext_1d_displacement_flag | u(1) |
| } | |

# FIG. 7

| atlas_frame_parameter_set_rbsp( ) { | Descriptor |
|---|---|
| afps_atlas_frame_parameter_set_id | ue(v) |
| ... | |
| afps_extension_present_flag | u(1) |
| if( afps_extension_present_flag ) { | |
| afps_miv_extension_present_flag | u(1) |
| afps_vpcc_extension_present_flag | u(1) |
| afps_vdmc_extension_present_flag | u(1) |
| afps_extension_5bits | u(5) |
| } | |
| ... | |
| if( asps_vdmc_extension_present_flag ) | |
| afps_vdmc_extension( ) | |
| ... | |
| } | |

| afps_vdmc_extension( ) { | Descriptor |
|---|---|
| afps_vdmc_ext_overriden_flag | u(1) |
| if ( afps_vdmc_ext_overriden_flag ) { | |
| afps_vdmc_ext_subdivision_iteration_count | u(8) |
| afps_vdmc_ext_displacement_coordinate_system | u(3) |
| afps_vdmc_ext_1d_displacement_flag | u(1) |
| } | |
| } | |

# FIG. 8

(a) BASE MESH

(b) SUBDIVIDED MESH

(c) DEFORMED MESH

○ : VERTEX

↗ : MESH DISPLACEMENT

# FIG. 9

FIG. 10

FIG. 11

FIG. 12

FIG. 13

(a) MESH

(b) BASE MESH

(c) SUBDIVIDED MESH

(d) MESH DISPLACEMENT

○ : VERTEX

↗ : MESH DISPLACEMENT

# FIG. 14

| displ_unit( unitSize, lodCount, subBlockSize, vertexCount ) { | Descriptor |
|---|---|
| for( k = 0; k < 3; k++ ) { | |
| **diu_last_sig_coeff[ k ]** | ae(v) |
| for( b = 0; b < lodCount; b++ ) { | |
| **diu_coded_block_flag[ k ][ b ]** | u(v) |
| if( diu_coded_block_flag[ k ][ b ] ) { | |
| for( s = 0; s < vertexCount[ b ] % subBlockSize; s++ ) { | |
| **diu_coded_subblock_flag[ k ][ b ][ s ]** | u(v) |
| if( diu_coded_subblock_flag[ k ][ b ][ s ] ) { | |
| for( v = vStart; v < subBlockSize; v++ ) { | |
| **diu_coeff_abs_level_gt0[ k ][ b ][ s ][ v ]** | u(v) |
| if( diu_coeff_abs_level_gt0[ k ][ b ][ s ][ v ] ) { | |
| **diu_coeff_sign[ k ][ b ][ s ][ v ]** | u(1) |
| **diu_coeff_abs_level_gt1[ k ][ b ][ s ][ v ]** | u(v) |
| if( diu_coeff_abs_level_gt1[ k ][ b ][ s ][ v ] ) { | |
| **diu_coeff_abs_level_gt2[ k ][ b ][ s ][ v ]** | u(v) |
| if( diu_coeff_abs_level_gt2[ k ][ b ][ s ][ v ] ) { | |
| **diu_coeff_abs_level_gt3[ k ][ b ][ s ][ v ]** | u(v) |
| if( diu_coeff_abs_level_gt3[ k ][ b ][ s ][ v ] ) { | |
| **diu_coeff_abs_level_rem[ k ][ b ][ s ][ v ]** | ue(v) |
| } | |
| } | |
| } | |
| } | |
| } | |
| } | |
| } | |
| } | |
| if ( dsps_single_dimension_flag ) { | |
| break; | |
| } | |
| } | |
| } | |

# FIG. 15

FIG. 16

| sismu_intra_unit ( subMeshID, vertexCount ) { | Descriptor |
|---|---|
|   for( k = 0; k < 3; k++ ) { | |
|     for( v = 0; v < vertexCount; v++ ) { | |
|       value = 0 | |
|       **sismu_bm_zero**[ subMeshID ][ v ][ k ] | ae(v) |
|       if (!sismu_bm_zero[ subMeshID ][ v ][ k ]) { | |
|         value++ | |
|         **sismu_bm_sign**[ subMeshID ][ v ][ k ] | ae(v) |
|         bias = 3 | |
|         for ( b = 0; b < bias; b++) { | |
|           **sismu_bm_level_bias**[ subMeshID ][ v ][ k ][ b ] | ae(v) |
|           if (!sismu_bm_level_bias[ subMeshID ][ v ][ k ][ b ]) { | |
|             break | |
|           } | |
|           value++ | |
|         } | |
|         if (value == (bias + 1)) { | |
|           **sismu_bm_coeff_abs_rem**[ subMeshID ][ v ][ k ] | ae(v) |
|         } | |
|       } | |
|     } | |
|   } | |
| } | |

# FIG. 17

(a)

| Syntax Name | CtxTbl (Name) | | CtxInc (CtxIdx) |
|---|---|---|---|
| sismu_bm_zero | 0 (ctxBmZero) | | 0 |
| sismu_bm_sign | - | | bypass |
| sismu_bm_level_bias | 1 (ctxBmLevelBias [CtxInc][b]) | islow==0 | 0 |
| | | islow!=0 | 1 |
| sismu_bm_coeff_abs_rem | 2 (ctxBmCoeffRemPrefix[CtxInc]) | prefix bin==0 | 0 |
| | | prefix bin==1 | 1 |
| | - | prefix bin>=2 | bypass |
| | - | suffix | bypass |

(b)

| Syntax Name | CtxTbl (Name) | | CtxInc (CtxIdx) |
|---|---|---|---|
| sismu_bm_zero | 0 (ctxBmZero) | | 0 |
| sismu_bm_sign | - | | bypass |
| sismu_bm_level_bias | 1 (ctxBmLevelBias [CtxInc][b]) | islow==0 | 0 |
| | | islow!=0 | 1 |
| sismu_bm_coeff_abs_rem | 2 (ctxBmCoeffRemPrefix[CtxInc]) | prefix bin==0 | 0 |
| | - | prefix bin>=1 | bypass |
| | 3 (ctxBmCoeffRemSuffix[CtxInc]) | suffix bin==0 | 0 |
| | - | suffix bin>=1 | bypass |

(c)

| Syntax Name | CtxTbl (Name) | | CtxInc (CtxIdx) |
|---|---|---|---|
| sismu_bm_zero | 0 (ctxBmZero) | | 0 |
| sismu_bm_sign | - | | bypass |
| sismu_bm_level_bias | 1 (ctxBmLevelBias [CtxInc][b]) | islow==0 | 0 |
| | | islow!=0 | 1 |
| sismu_bm_coeff_abs_rem | 2 (ctxBmCoeffRemPrefix[CtxInc]) | prefix bin==0 | 0 |
| | | prefix bin==1 | 1 |
| | - | prefix bin>=2 | bypass |
| | 3 (ctxBmCoeffRemSuffix[CtxInc]) | suffix bin==0 | 0 |
| | | suffix bin==1 | 1 |
| | - | suffix bin>=2 | bypass |

# FIG. 18

FIG. 19

Europäisches
Patentamt

European
Patent Office

Office européen
des brevets

# EUROPEAN SEARCH REPORT

**Application Number**

EP 24 19 6563

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | YASUAKI TOKUMO ET AL: "[V-DMC] [EE4.4] Report of EE4.4b on limited context coding", 146. MPEG MEETING; 20240422 - 20240426; RENNES; (MOTION PICTURE EXPERT GROUP OR ISO/IEC JTC1/SC29/WG11), , no. m67329 10 May 2024 (2024-05-10), XP030319665, Retrieved from the Internet: URL:https://dms.mpeg.expert/doc_end_user/d ocuments/146_Rennes/wg11/m67329-v3-m67329_ V-DMC_EE4.4b_limited_context_coding_v3.zip m67329_V-DMC_EE4.4b_limited_context_coding _v2.docx [retrieved on 2024-05-10] | 1-4 | INV. H04N19/13 G06T9/00 H04N19/503 H04N19/60 H04N19/91 |
| Y,P | * page 1 - page 4 * | 1-4 | |
| X,P | YASUAKI TOKUMO ET AL: "[V-DMC] [EE4.4] Report of EE4.4b on limited context coding", 147. MPEG MEETING; 20240715 - 20240719; SAPPORO; (MOTION PICTURE EXPERT GROUP OR ISO/IEC JTC1/SC29/WG11), , no. m68342 8 July 2024 (2024-07-08), XP030321288, Retrieved from the Internet: URL:https://dms.mpeg.expert/doc_end_user/d ocuments/147_Sapporo/wg11/m68342-v1-m68342 _V-DMC_EE4.4b_limited_context_coding_v1.zi p m68342_V-DMC_EE4.4b_limited_context_coding _v1.docx [retrieved on 2024-07-08] | 1-4 | |
| | | | **TECHNICAL FIELDS SEARCHED (IPC)** H04N G06T |
| Y,P | * page 1 - page 5 * | 1-4 | |

-/--

The present search report has been drawn up for all claims

| Place of search | Date of completion of the search | Examiner |
|---|---|---|
| Munich | 24 January 2025 | Ernst, Jens |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...................................................................
& : member of the same patent family, corresponding
document

EPO FORM 1503 03.82 (P04C01)

Europäisches Patentamt

European Patent Office

Office européen des brevets

# EUROPEAN SEARCH REPORT

**Application Number**

EP 24 19 6563

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | OLIVIER MOCQUARD (INTERDIGITAL) ET AL: "[V-DMC][Editorial] MEB syntax update for TMM v4 alignment", 143. MPEG MEETING; 20230717 - 20230721; GENEVA; (MOTION PICTURE EXPERT GROUP OR ISO/IEC JTC1/SC29/WG11), , no. m63760 3 July 2023 (2023-07-03), XP030324089, Retrieved from the Internet: URL:https://dms.mpeg.expert/doc_end_user/documents/143_Geneva/wg11/m63760-v1-m63760-%5BV-DMC%5D%5BEditorial%5D-MEB-syntax-update-for-TMM-v4-alignment.zip m63760-[V-DMC][Editorial]-MEB-syntax-update-for-TMM-v4-alignment/MDS22775_WG07_N00611_d9_m62604_implementation_fixes.docx [retrieved on 2023-07-03] * page 1 - page 126 * ----- | 1-4 | |

|  |  |  | TECHNICAL FIELDS SEARCHED (IPC) |
|---|---|---|---|

The present search report has been drawn up for all claims

| Place of search | Date of completion of the search | Examiner |
|---|---|---|
| Munich | 24 January 2025 | Ernst, Jens |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................
& : member of the same patent family, corresponding document

EPO FORM 1503 03.82 (P04C01)